# EUROPÄISCHE PATENTSCHRIFT

(11) **EP 0 586 332 B1**
(45) Veröffentlichungstag und Bekanntmachung des Hinweises auf die Patenterteilung: **05.02.1997**
(21) Anmeldenummer: 93810539.2
(22) Anmeldetag: 27.07.1993
(51) Int. Cl.: C08B 37/00, G02B 1/04, C08G 77/42

(54) **Kontaktlinsen aus lipophilisierten Cyclodextrinen**
Contact lenses made from lipophilic cyclodextrines
Lentilles de contact à base de cyclodextrines à groupes lipophiles

(30) Priorität: 05.08.1992 EP 92810599
(43) Veröffentlichungstag der Anmeldung: 09.03.1994
(73) Patentinhaber: CIBA-GEIGY AG, 4002 Basel (CH); Max-Planck-Gesellschaft zur Förderung der Wissenschaften e.V. Berlin, 80539 München (DE)
(72) Erfinder: Herbrechtsmeier, Peter, Dr., D-6240 Königstein (DE); Schäfer, Horst, Dr., D-8750 Aschaffenburg 19 (DE); Seiferling, Bernhard, Dr., D-8752 Goldbach (DE); Wenke, Klaus, D-6200 Wiesbaden (DE); Wenz, Gerhard, D-6500 Mainz (DE)

(56) Entgegenhaltungen:
- EP-A- 0 317 377
- WO-A-92/07056
- FR-A- 2 646 672
- CHEMICAL ABSTRACTS, vol. 116, no. 18, 4. Mai 1992, Columbus, Ohio, US; abstract no. 174900x, VON DER BEY E. 'Synthesis and characterization of immobilized lipophilic cyclodextrins' Seite 9 ;
- CHEMICAL ABSTRACTS, vol. 95, no. 8, 24. August 1981, Columbus, Ohio, US; abstract no. 62402c, MACIEJEWSKI M. 'Adducts of cyclodextrins with siloxane oligomers' Seite 741 ;

## Beschreibung

Die vorliegende Erfindung betrifft Kontaktlinsen enthaltend speziell modifizierte Cyclodextrine, die Herstellung dieser Kontaktlinsen und die Verwendung der speziell modifizierten Cyclodextrine zur Herstellung von Kontaktlinsen.

Cyclodextrine sind bekannt. Es handelt sich um Cycloamylosen, die in der Natur vorkommen. Man kennt insbesondere α-Cyclodextrin, das aus sechs Einheiten besteht, β-Cyclodextrin, das aus sieben Einheiten besteht und γ-Cyclodextrin, das aus acht Einheiten besteht. Unter Einheit wird in diesem Zusammenhang jeweils ein Ring der Formel A 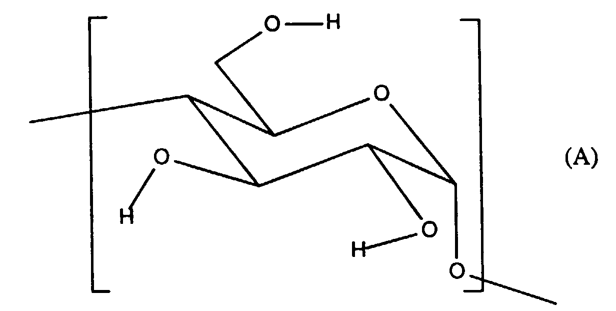 verstanden. Jeweils sechs, sieben oder acht Ringe der Formel A bilden einen in sich geschlossenen Cyclus mit α-(1-4)-verbundenen Glucopyranose-Einheiten, jenachdem ob es sich um α-Cyclodextrin handelt, das sechs Ringe der Formel A enthält, um β-Cyclodextrin, das sieben Ringe der Formel A enthält, oder um γ-Cyclodextrin, das 8 Ringe der Formel A enthält. Jedes Cyclodextrin-Molekül stellt also ein Makromolekül mit einem Hohlraum dar. Es sind auch Cyclodextrine enthaltend mehr als 8 Einheiten der Formel A bekannt. Diese fallen üblicherweise als Gemische an, die sich jedoch bei Bedarf auftrennen lassen.

Die erfindungsgemäss verwendeten Cyclodextrine sind dahingehend modifiziert, dass sie nicht mehr ausschliesslich freie Hydroxyl-Gruppen enthalten. Stattdessen sind einige Hydroxylgruppen oder alle Hydroxylgruppen verethert. Zusätzlich sind einige der veretherten Gruppen, mindestens jedoch eine davon, dahingehend funktionalisiert, dass sie mit Hydrogen-polysiloxanen, beispielsweise mit α,ω-Dihydrogen-polysiloxanen umgesetzt werden können. Diese Umsetzung führt nicht allein zu einer weiteren Funktionalisierung eines einzelnen Cyclodextrin-Moleküls, sondern wegen der Multi- bzw. Bifunktionalität beispielsweise der α,ω-Dihydrogen-polysiloxane zu einer Vernetzung von verschiedenen Cyclodextrin-Molekülen untereinander. Auf diese Weise lässt sich ein Material herstellen, das polymeres Cyclodextrin umfasst, welches unter anderem durch die Anwesenheit von Siloxanbrücken mehr oder minder stark ausgeprägte lipophile Eigenschaften aufweist.

Dieses Material hat sich überraschenderweise als ausserordentlich geeignet für die Herstellung von Kontaktlinsen erwiesen. Zum Beispiel kann durch Variation der Kettenlänge der Siloxanbrücken die Hydrophilie bzw. Lipophilie des Materials eingestellt werden. Darüberhinaus gibt es weitere Parameter, die eine Optimierung der für den jeweiligen Zweck gewünschten Eigenschaften erlauben. Hierzu gehören Art und Anzahl der Ethergruppen. Die aus dem genannten Material erhältlichen Kontaktlinsen sind farblos, transparent, weisen eine gute mechanische Stabilität auf und erfüllen die hohen Anforderungen, die an Kontaktlinsen gestellt werden, beispielsweise auch im Hinblick auf ihre Kontaktwinkel. In besonderer Weise attraktiv sind die erfindungsgemässen Kontaktlinsen jedoch wegen ihrer Sauerstoffdurchlässigkeit. Diese liegt bei Dk-Werten von etwa 100 bis 200 für die meisten Fälle und von bis zu 500 als Spitzenwert.

Die vorliegende Erfindung betrifft daher eine Kontaktlinse, die dadurch gekennzeichnet ist, dass sie ein vernetztes lipophilisiertes Cyclodextrin-Derivat enthält, das aus der Umsetzung einer Verbindung der Formel I 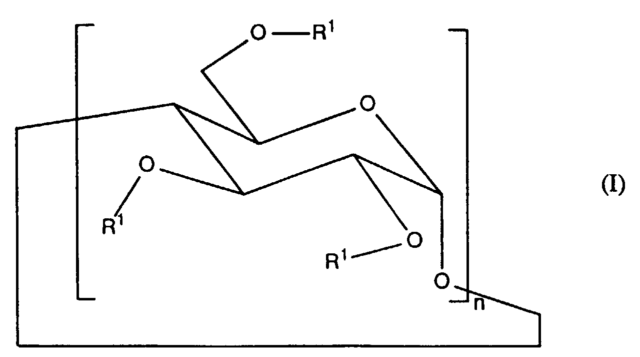 mit einer Verbindung der Formel II erhältlich ist, 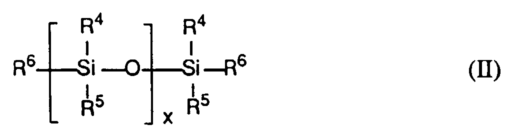 worin n eine Zahl von 6 bis 15 bedeutet, jeder der Reste R¹ unabhängig voneinander für Wasserstoff, R² oder R³ steht, wobei von den (3 mal n) Resten R¹ mindestens ein Rest R¹ die Bedeutung von R³ hat und die verbleibenden Reste R¹ für Wasserstoff stehen oder die Bedeutung von R² haben,
worin R² für unsubstituiertes oder durch Halogen substituiertes Alkyl oder für durch Alkyl substituiertes Aryl steht, und worin R³ für unsubstituiertes oder durch Halogen substituiertes Alkenyl steht,
worin ferner x für eine Zahl von 1 bis 10000 steht, R⁴, R⁵ und R⁶ unabhängig voneinander Wasserstoff, Alkyl, Phenyl oder Hydroxy bedeuten, mit der Massgabe dass in einer Verbindung der Formel II mindestens zwei der Reste R⁴, R⁵ und R⁶ Wasserstoff bedeuten.

Vorzugsweise bedeuten in einer Verbindung der Formel II höchstens etwa 50 % der Reste R⁴, R⁵ und R⁶ Wasserstoff.

Reste und Gruppen, die mit "Nieder" bezeichnet sind, wie Niederalkyl, Niederalkenyl etc., bedeuten Reste und Gruppen mit bis zu 7 Kohlenstoffatomen, bevorzugt mit bis zu 4 Kohlenstoffatomen. Reste wie Alkyl, Alkenyl, Alkylen oder dergleichen stehen für unverzweigte oder verzweigte Reste dieser Art.

Alkyl steht insbesondere für unverzweigtes oder verzweigtes Alkyl mit bis zu 12 Kohlenstoffatomen, bevorzugt für Niederalkyl, und bedeutet z.B. Methyl, Ethyl, Propyl, 2-Propyl, Butyl, tert.-Butyl, Pentyl, Hexyl, Octyl oder Decyl.

Halogen steht für Fluor, Chlor oder Brom, kann auch für Iod stehen und bedeutet erfindungsgemäss bevorzugt Fluor.

Aryl steht insbesondere für einen aromatischen Kohlenwasserstoffrest und bedeutet bevorzugt Naphthyl und Phenyl.

Alkenyl steht insbesondere für unverzweigtes oder verzweigtes Alkenyl mit bis zu 12 Kohlenstoffatomen, bevorzugt für Niederalkenyl, und bedeutet z.B. Ethenyl, Propenyl, Butenyl, Pentenyl, Hexenyl, Octenyl oder Decenyl. Alkenyl kann auch mehrfach ungesättigte Reste bedeuten, also z.B. Niederalk-dien-yl, wie Hexadienyl oder Pentadienyl, z.B. Hexa-2,5-dien-1-yl. Die in den Alkenylresten vorhandene Kohlenstoff-Kohlenstoff-Doppelbindung kann endständig sein oder in der Kette vorliegen. Im Falle mehrfach ungesättigter Reste kann zumindest eine Kohlenstoff-Kohlenstoff-Doppelbindung endständig sein.

Durch Halogen substituiertes Alkyl ist insbesondere durch Fluor substituiertes Alkyl, wie Fluorniederalkyl, z.B. Trifluormethyl, Trifluorethyl, Pentafluorethyl, Heptafluorbutyl oder Nonafluorbutyl.

Durch Alkyl substituiertes Aryl ist insbesondere ein- bis dreifach durch Niederalkyl substituiertes Phenyl, wie z.B. Tolyl, Ethylphenyl, Xylyl, Butylphenyl oder Pentylphenyl.

Durch Halogen substituiertes Alkenyl ist insbesondere durch Fluor substituiertes Alkenyl, wie Fluorniederalkenyl, z.B. Trifluorethenyl, Pentafluorpropenyl, Heptafluorbutenyl oder Nonafluorhexenyl. Auch durch Halogen substituiertes Alkenyl kann eine oder mehrere Kohlenstoff-Kohlenstoff-Doppelbindungen aufweisen, ferner kann diese Bindung endständig sein oder in der Kette vorliegen. Im Falle mehrfach ungesättigter Reste kann zumindest eine Kohlenstoff-Kohlenstoff-Doppelbindung endständig sein.

Der Index n steht für eine Zahl von 6 bis 15, insbesondere für eine Zahl von 6 bis 10, bevorzugt für die Zahlen 6, 7 oder 8. Insbesondere bedeutet der Index n die Zahl 7, d.h die verwendeten Cyclodextrine werden ausgehend von β-Cyclodextrin hergestellt. Es können auch Gemische von Cyclodextrinen mit unterschiedlicher Anzahl von α-(1-4)-verbundenen Glucopyranose-Einheiten verwendet werden, d.h. der Index n kann in einem polymeren Cyclodextrin, das erfindungsgemäss für Kontaktlinsen verwendet wird, verschiedene Werte, die zwischen 6 und 15 liegen, aufweisen.

R¹ steht vorzugsweise für R² oder R³. Von den (3 mal n) Resten R¹ (z.B. den 18 Resten R¹ für den Fall, dass n 6 bedeutet, den 21 Resten R¹ für den Fall, dass n 7 bedeutet oder den 24 Resten R¹ für den Fall, dass n 8 bedeutet) haben bevorzugtermassen 50 % bis 100 % eines Drittels dieser Reste die Bedeutung von R³, während die anderen Reste R¹ die Bedeutung von R² haben. Die vorhandenen Reste R³ sind in der Regel gleichmässig auf die Ringe der Formel I verteilt. Sie befinden sich darüberhinaus vorzugweise in der 3-Position. Zur Veranschaulichung wird nachfolgend als Formel IA ein α-Cyclodextrin-Typus wiedergegeben, in dem 100 % eines Drittels der Reste R¹, und zwar einheitlich in der 3-Position, die Bedeutung R³ haben, während 100 % der beiden anderen Drittel der Reste R¹ die Bedeutung von R² haben:

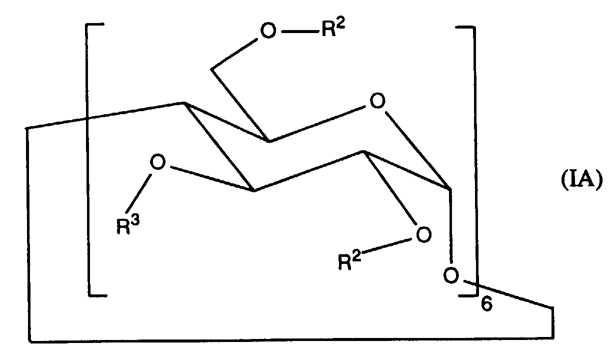

Demgegenüber wäre ein α-Cyclodextrin-Typus, in dem nur 50 % eines Drittels der Reste R¹ die Bedeutung R³ haben, durch eine Formel IA entsprechende Formel darzustellen, in der allerdings nicht alle 6 Ringe des Cyclodextrins einen Rest R³ aufweisen, sondern nur jeder zweite Ring, während alle anderen Reste R¹, im vorliegenden Fall also 15 Reste R¹, die Bedeutung von R² haben.

Besonders bevorzugt ist, dass 100 % eines Drittels der Reste R¹, gleichmässig auf die Ringe der Formel I verteilt, die Bedeutung R³ haben, während die beiden anderen Drittel der Reste R¹ die Bedeutung von R² haben. Speziell bevorzugt ist, dass die Reste R³ sich einheitlich in der 3-Position befinden. Diese Anordnung ist, beispielhaft für den Fall, dass der Index n für sechs steht, in Formel IA wiedergegeben.

Die Reste R² bedeuten vorzugsweise Alkyl, insbesondere Niederalkyl und besonders bevorzugt Niederalkyl mit 4 bis 7 Kohlenstoffatomen, wie Butyl, Pentyl oder Hexyl.

Die Reste R³ bedeuten vorzugsweise Alkenyl, insbesondere Niederalkenyl und besonders bevorzugt Niederalkenyl mit 3 bis 6 Kohlenstoffatomen, wie Allyl, Pentenyl oder Hexenyl.

Der Index x bedeutet 1 bis 10000, vorzugsweise 1 bis 1000, insbesondere 1 bis 500, vor allem 1 bis 200 oder 1 bis 100 und besonders bevorzugt 2 bis 85.

Im Zusammenhang mit den Resten R⁴, R⁵ und R⁶ muss die Bedingung erfüllt sein, dass mindestens zwei von ihnen, aber vorzugsweise nicht mehr als etwa 50 % aller Reste R⁴, R⁵ und R⁶, Wasserstoff bedeuten. Besonders bevorzugt ist, dass nicht mehr als etwa 25 % aller Reste R⁴, R⁵ und R⁶ Wasserstoff bedeuten. Speziell bevorzugt ist, dass genau zwei der Reste R⁴, R⁵ und R⁶ Wasserstoff bedeuten. Dies sind bevorzugtermassen die beiden Reste R⁶.

Eine bevorzugte Kombination von Bedeutungen, bei der zwei Silicium-Wasserstoff-Bindungen endständig angeordnet sind, ist die folgende:

Die Reste R⁴ und R⁵ bedeuten vorzugsweise Alkyl oder Phenyl, insbesondere Niederalkyl, wie Methyl oder Ethyl, oder Phenyl. Besonders bevorzugt ist für die Reste R⁴ und R⁵ die Bedeutung Niederalkyl mit bis zu 4 Kohlenstoffatomen, wie Methyl. Die Reste R⁶ bedeuten Wasserstoff. Verbindungen der Formel II, bei denen die Reste R⁴, R⁵ und R⁶ diese Bedeutungen aufweisen, sind α,ω-Dihydrogen-polysiloxane.

Eine andere bevorzugte Kombination von Bedeutungen, bei der Silicium-Wasserstoff-Bindungen nicht notwendigerweise endständig angeordnet sind, ist die folgende:

Die Reste R⁴, R⁵ und R⁶ bedeuten Wasserstoff, Alkyl oder Phenyl, insbesondere Wasserstoff, Niederalkyl, wie Methyl oder Ethyl, oder Phenyl, mit der Massgabe, dass mindestens zwei der Reste R⁴, R⁵ und R⁶ und vorzugsweise maximal 50 % der Reste R⁴, R⁵ und R⁶ Wasserstoff bedeuten.

Die vorliegende Erfindung betrifft daher insbesondere eine Kontaktlinse, die dadurch gekennzeichnet ist, dass sie ein vernetztes lipophilisiertes Cyclodextrin-Derivat enthält, das aus der Umsetzung einer Verbindung der Formel I mit einer Verbindung der Formel II erhältlich ist, worin n eine Zahl von 6 bis 15 bedeutet, jeder der Reste R¹ unabhängig voneinander für Wasserstoff, R² oder R³ steht, wobei von den (3 mal n) Resten R¹ mindestens ein Rest R¹ die Bedeutung von R³ hat und die verbleibenden Reste R¹ für Wasserstoff stehen oder die Bedeutung von R² haben,
worin R² für unsubstituiertes Alkyl steht, worin R³ für unsubstituiertes Alkenyl steht, worin x für eine Zahl von 1 bis 1000 steht und R⁴, R⁵ und R⁶ unabhängig voneinander Wasserstoff, Alkyl oder Phenyl bedeuten, wobei mindestens zwei der Reste R⁴, R⁵ und R⁶ Wasserstoff bedeuten.

Hierunter ist eine Kontaktlinse bevorzugt, die dadurch gekennzeichnet ist, dass sie ein vernetztes lipophilisiertes Cyclodextrin-Derivat enthält, das aus der Umsetzung einer Verbindung der Formel I mit einer Verbindung der Formel II erhältlich ist, worin n eine Zahl von 6 bis 15 bedeutet, die Reste R¹ in 2-Position und in 6-Position unsubstituiertes Alkyl bedeuten, die Reste R¹ in 3-Position unsubstituiertes Alkenyl bedeuten, worin x für eine Zahl von 1 bis 1000 steht und R⁴, R⁵ und R⁶ unabhängig voneinander Wasserstoff, Alkyl oder Phenyl bedeuten, wobei mindestens zwei der Reste R⁴, R⁵ und R⁶ Wasserstoff bedeuten.

Hierunter ist ebenfalls eine Kontaktlinse bevorzugt, die dadurch gekennzeichnet ist, dass sie ein vernetztes lipophilisiertes Cyclodextrin-Derivat enthält, das aus der Umsetzung einer Verbindung der Formel I mit einer Verbindung der Formel II erhältlich ist, worin n eine Zahl von 6 bis 15 bedeutet, die Reste R¹ in 2-Position und in 6-Position unsubstituiertes Alkyl bedeuten und die Reste R¹ in 3-Position zu mindestens 50 % unsubstituiertes Alkenyl bedeuten, während der verbleibende Prozentsatz Reste R¹ in 3-Position unsubstituiertes Alkyl bdeutet, worin x für eine Zahl von 1 bis 1000 steht und R⁴, R⁵ und R⁶ unabhängig voneinander Wasserstoff, Alkyl oder Phenyl bedeuten, wobei mindestens zwei der Reste R⁴, R⁵ und R⁶ Wasserstoff bedeuten.

Hierunter ist ferner eine Kontaktlinse bevorzugt, die dadurch gekennzeichnet ist, dass sie ein vernetztes lipophilisiertes Cyclodextrin-Derivat enthält, das aus der Umsetzung einer Verbindung der Formel I mit einer Verbindung der Formel II erhältlich ist, worin n eine Zahl von 6 bis 15 bedeutet, die Reste R¹ in 2-Position und in 6-Position unsubstituiertes Alkenyl bedeuten, die Reste R¹ in 3-Position Wasserstoff bedeuten, worin x für eine Zahl von 1 bis 1000 steht und R⁴, R⁵ und R⁶ unabhängig voneinander Wasserstoff, Alkyl oder Phenyl bedeuten, wobei mindestens zwei der Reste R⁴, R⁵ und R⁶ Wasserstoff bedeuten.

Die vorliegende Erfindung betrifft besonders bevorzugt eine Kontaktlinse, die dadurch gekennzeichnet ist, dass sie ein vernetztes lipophilisiertes Cyclodextrin-Derivat enthält, das aus der Umsetzung einer Verbindung der Formel I mit einer Verbindung der Formel II erhältlich ist, worin n eine Zahl von 6 bis 15 bedeutet, jeder der Reste R¹ unabhängig voneinander für Wasserstoff, R² oder R³ steht, wobei von den (3 mal n) Resten R¹ 50 % bis 100 % eines Drittels dieser Reste die Bedeutung von R³ haben, während die anderen Reste R¹ die Bedeutung von Wasserstoff oder R² haben,
worin R² für unsubstituiertes Alkyl steht, worin R³ für unsubstituiertes Alkenyl steht, worin x für eine Zahl von 1 bis 500 steht und R⁴, R⁵ und R⁶ unabhängig voneinander Wasserstoff, Alkyl oder Phenyl bedeuten, wobei mindestens zwei der Reste R⁴, R⁵ und R⁶ Wasserstoff bedeuten.

Die vorliegende Erfindung betrifft daher in ganz besonderem Masse eine Kontaktlinse, die dadurch gekennzeichnet ist, dass sie ein vernetztes lipophilisiertes Cyclodextrin-Derivat enthält, das aus der Umsetzung einer Verbindung der Formel III 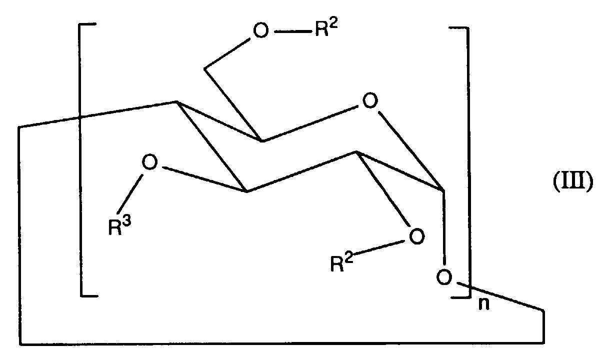 mit einer Verbindung der Formel IV 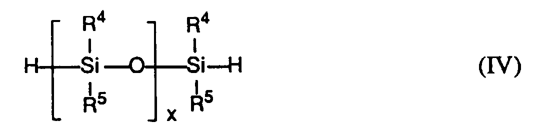 erhältlich ist, worin n eine Zahl von 6 bis 15 bedeutet,
worin R² für unsubstituiertes Alkyl steht, worin R³ für unsubstituiertes Alkenyl steht, worin x für eine Zahl von 1 bis 500 steht und R⁴ und R⁵ unabhängig voneinander Alkyl oder Phenyl bedeuten. Der Index n bedeutet in einer Verbindung der Formel III vorzugsweise 6, 7 oder 8.

Gleichermassen betrifft die vorliegende Erfindung auch eine Kontaktlinse, die dadurch gekennzeichnet ist, dass sie ein vernetztes lipophilisiertes Cyclodextrin-Derivat enthält, das aus der Umsetzung einer Verbindung der Formel III, wie vorstehend definiert, mit einer Verbindung der Formel II erhältlich ist, worin x für eine Zahl von 1 bis 500 steht und worin die Reste R⁴, R⁵ und R⁶ Wasserstoff, Alkyl oder Phenyl bedeuten, mit der Massgabe, dass mindestens zwei der Reste R⁴, R⁵ und R⁶ und maximal etwa 25 % der Reste R⁴, R⁵ und R⁶ Wasserstoff bedeuten.

Insbesondere betrifft die vorliegende Erfindung eine Kontaktlinse, die dadurch gekennzeichnet ist, dass sie ein vernetztes lipophilisiertes Cyclodextrin-Derivat enthält, das aus der Umsetzung einer Verbindung der Formel III mit einer Verbindung der Formel IV erhältlich ist, worin n eine der Zahlen 6, 7 oder 8 bedeutet,
worin R² für Niederalkyl mit 4 bis 7 Kohlenstoffatomen steht, worin R³ für Niederalkenyl mit 3 bis 6 Kohlenstoffatomen steht,
worin x für eine Zahl von 1 bis 200 steht und R⁴ und R⁵ unabhängig voneinander Niederalkyl oder Phenyl bedeuten.

Die vorliegende Erfindung betrifft ebenfalls eine Kontaktlinse, die ein vernetztes lipophilisiertes Cyclodextrin-Derivat enthält, welches gekennzeichnet ist durch sich wiederholende Untereinheiten der Formel V, 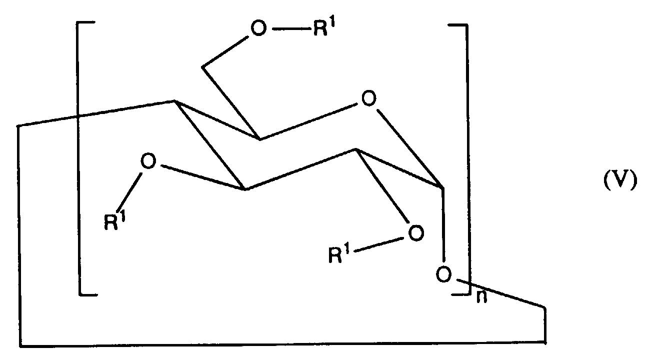 worin n eine Zahl von 6 bis 15 bedeutet, jeder der Reste R¹ unabhängig voneinander für Wasserstoff, R² oder R⁷ steht, wobei von den (3 mal n) Resten R¹ mindestens ein Rest R¹ die Bedeutung von R⁷ hat und die verbleibenden Reste R¹ für Wasserstoff stehen oder die Bedeutung von R² haben,
worin R² für unsubstituiertes oder durch Halogen substituiertes Alkyl oder für durch Alkyl substituiertes Aryl steht, und worin R⁷ für einen zwei- oder mehrwertigen Rest der Formel VI steht 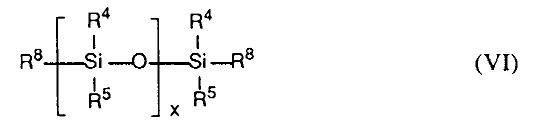 worin x für eine Zahl von 1 bis 10000 steht, R⁴, R⁵ und R⁸ unabhängig voneinander Wasserstoff, Alkyl, unsubstituiertes oder durch Halogen substituiertes Alkylen oder Alkenylen, Phenyl oder Hydroxy bedeuten, mit der Massgabe dass in einem Rest der Formel VI mindestens zwei der Reste R⁴, R⁵ und R⁸ unsubstituiertes oder durch Halogen substituiertes Alkylen oder Alkenylen bedeuten.

Vorzugsweise bedeuten in einem Rest der Formel VI höchstens etwa 50 % der Reste R⁴, R⁵ und R⁸ Wasserstoff. Die Wertigkeit des Restes der Formel VI hängt von der Anzahl der Substituenten R⁴, R⁵ und R⁸ ab, die unsubstituiertes oder durch Halogen substituiertes Alkylen oder Alkenylen bedeuten. Der Rest der Formel VI ist mindestens zweiwertig, bevorzugt zwei- bis fünfwertig und besonders bevorzugt zweiwertig.

Alkylen steht insbesondere für unverzweigtes oder verzweigtes Alkylen mit bis zu 12 Kohlenstoffatomen, bevorzugt für Niederalkylen, und bedeutet z.B. Ethylen, Propylen, Butylen, Pentylen, Hexylen, Octylen oder Decylen.

Alkenylen steht insbesondere für unverzweigtes oder verzweigtes Alkenylen mit bis zu 12 Kohlenstoffatomen, bevorzugt für Niederalkenylen, und bedeutet z.B. Butenylen, Pentenylen, Hexenylen, Octenylen oder Decenylen.

Durch Halogen substituiertes Alkylen ist insbesondere durch Fluor substituiertes Alkylen, wie Fluorniederalkylen, z.B. Difluorethylen, Tetrafluorethylen, Hexafluorbutylen oder Octafluorbutylen.

Durch Halogen substituiertes Alkenylen ist insbesondere durch Fluor substituiertes Alkenylen, wie Fluorniederalkenylen, z.B. Hexafluorbutenylen oder Octafluorhexenylen. Eine in den Alkenylenresten oder in den durch Halogen substituierten Alkenylenresten vorhandene Kohlenstoff-Kohlenstoff-Doppelbindungen kann endständig sein oder in der Kette vorliegen.

Der Index n steht für eine Zahl von 6 bis 15, insbesondere für eine Zahl von 6 bis 10, bevorzugt für die Zahlen 6, 7 oder 8. Insbesondere bedeutet der Index n die Zahl 7, d.h die verwendeten Cyclodextrine werden ausgehend von β-Cyclodextrin hergestellt. Es können auch Gemische von Cyclodextrinen mit unterschiedlicher Anzahl von α-(1-4)-verbundenen Glucopyranose-Einheiten verwendet werden, d.h. der Index n kann in einem polymeren Cyclodextrin, das erfindungsgemäss für Kontaktlinsen verwendet wird, verschiedene Werte, die zwischen 6 und 15 liegen, aufweisen.

R¹ steht vorzugsweise für R² oder R⁷. Von den (3 mal n) Resten R¹ (z.B. den 18 Resten R¹ für den Fall, dass n 6 bedeutet, den 21 Resten R¹ für den Fall, dass n 7 bedeutet oder den 24 Resten R¹ für den Fall, dass n 8 bedeutet) haben bevorzugtermassen 50 % bis 100 % eines Drittels dieser Reste die Bedeutung von R⁷, während die anderen Reste R¹ die Bedeutung von R² haben. Die vorhandenen Reste R⁷ sind in der Regel gleichmässig auf die Ringe der Formel V verteilt. Sie befinden sich darüberhinaus vorzugweise in der 3-Position. Zur Veranschaulichung wird nachfolgend als Formel VA ein α-Cyclodextrin-Typus wiedergegeben, in dem 100 % eines Drittels der Reste R¹, und zwar einheitlich in der 3-Position, die Bedeutung R⁷ haben, während 100 % der beiden anderen Drittel der Reste R¹ die Bedeutung von R² haben:

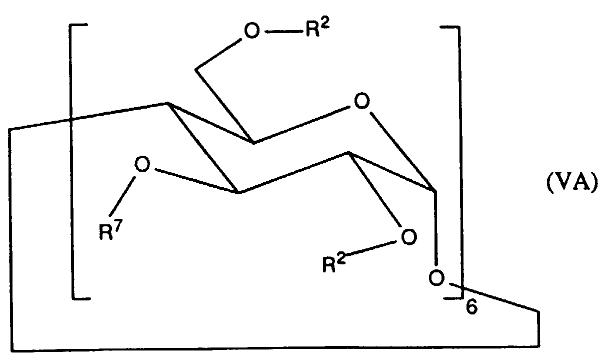

Demgegenüber wäre ein α-Cyclodextrin-Typus, in dem nur 50 % eines Drittels der Reste R¹ die Bedeutung R⁷ haben, durch eine Formel VA entsprechende Formel darzustellen, in der allerdings nicht alle 6 Ringe des Cyclodextrins einen Rest R⁷ aufweisen, sondern nur jeder zweite Ring, während alle anderen Reste R¹, im vorliegenden Fall also 15 Reste R¹, die Bedeutung von R² haben.

Besonders bevorzugt ist, dass 100 % eines Drittels der Reste R¹, gleichmässig auf die Ringe der Formel I verteilt, die Bedeutung R⁷ haben, während die beiden anderen Drittel der Reste R¹ die Bedeutung von R² haben. Speziell bevorzugt ist, dass die Reste R⁷ sich einheitlich in der 3-Position befinden. Diese Anordnung ist, beispielhaft für den Fall, dass der Index n für sechs steht, in Formel VA wiedergegeben.

Die Reste R² bedeuten vorzugsweise Alkyl, insbesondere Niederalkyl und besonders bevorzugt Niederalkyl mit 4 bis 7 Kohlenstoffatomen, wie Butyl, Pentyl oder Hexyl.

Die Reste R⁴, R⁵ und R⁸ bedeuten vorzugsweise Alkylen, insbesondere Niederalkylen und besonders bevorzugt Niederalkylen mit 3 bis 6 Kohlenstoffatomen, wie 1,3-Propylen, 1,2-Propylen, 1,5-Pentylen oder 1,6-Hexylen.

Der Index x bedeutet 1 bis 10000, vorzugsweise 1 bis 1000, insbesondere 1 bis 500, vor allem 1 bis 200 oder 1 bis 100 und besonders bevorzugt 2 bis 85.

Im Zusammenhang mit den Untereinheiten der Formel V muss für die Reste R⁴, R⁵ und R⁸ die Bedingung erfüllt sein, dass mindestens zwei von ihnen unsubstituiertes oder durch Halogen substituiertes Alkylen oder Alkenylen bedeuten. Ferner stehen vorzugsweise nicht mehr als etwa 50 % aller Reste R⁴, R⁵ und R⁸ für Wasserstoff. Besonders bevorzugt ist, dass nicht mehr als etwa 25 % aller Reste R⁴, R⁵ und R⁸ Wasserstoff bedeuten. Speziell bevorzugt ist, dass keiner der Reste R⁴, R⁵ und R⁸ Wasserstoff bedeutet. Speziell bevorzugt ist ferner, dass genau zwei der Reste R⁴, R⁵ und R⁸ unsubstituiertes oder durch Halogen substituiertes Alkylen oder Alkenylen bedeuten. Dies sind bevorzugtermassen die beiden Reste R⁸.

Eine bevorzugte Kombination von Bedeutungen für die Untereinheiten der Formel V ist die folgende:

Die Reste R⁴ und R⁵ bedeuten vorzugsweise Alkyl oder Phenyl, insbesondere Niederalkyl, wie Methyl oder Ethyl, oder Phenyl. Besonders bevorzugt ist für die Reste R⁴ und R⁵ die Bedeutung Niederalkyl mit bis zu 4 Kohlenstoffatomen, wie Methyl. Die Reste R⁸ bedeuten Alkylen, insbesondere Niederalkylen. Reste der Formel VI, bei denen die Reste R⁴, R⁵ und R⁸ diese Bedeutungen aufweisen, sind von α,ω-Dihydrogen-polysiloxanen abgeleitet.

Eine andere bevorzugte Kombination von Bedeutungen für die Untereinheiten der Formel V ist die folgende:

Die Reste R⁴, R⁵ und R⁸ bedeuten Wasserstoff, Alkyl, Alkylen oder Phenyl, insbesondere Wasserstoff, Niederalkyl, wie Methyl oder Ethyl, Niederalkylen, wie Pentylen, oder Phenyl, mit der Massgabe, dass mindestens zwei der Reste R⁴, R⁵ und R⁸ Alkylen bedeuten, insbesondere Niederalkylen, und vorzugsweise maximal 50 % der Reste R⁴, R⁵ und R⁸ Wasserstoff bedeuten.

Die vorliegende Erfindung betrifft daher insbesondere eine Kontaktlinse, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, jeder der Reste R¹ unabhängig voneinander für Wasserstoff, R² oder R⁷ steht, wobei von den (3 mal n) Resten R¹ mindestens ein Rest R¹ die Bedeutung von R⁷ hat und die verbleibenden Reste R¹ für Wasserstoff stehen oder die Bedeutung von R² haben, worin R² für unsubstituiertes Alkyl steht, worin R⁷ für einen zwei- oder mehrwertigen Rest der Formel VI steht, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

Hierunter ist eine Kontaktlinse bevorzugt, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, die Reste R¹ in 2-Position und in 6-Position unsubstituiertes Alkyl bedeuten, die Reste R¹ in 3-Position die Bedeutung von R⁷ haben, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

Hierunter ist ebenfalls eine Kontaktlinse bevorzugt, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, die Reste R¹ in 2-Position und in 6-Position unsubstituiertes Alkyl bedeuten und die Reste R¹ in 3-Position zu mindestens 50 % die Bedeutung von R⁷ haben, während der verbleibende Prozentsatz Reste R¹ in 3-Position unsubstituiertes Alkyl bdeutet, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

Hierunter ist ferner eine Kontaktlinse bevorzugt, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, die Reste R¹ in 3-Position Wasserstoff bedeuten, die Reste R¹ in 2-Position und in 6-Position die Bedeutung von R⁷ haben, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

Die vorliegende Erfindung betrifft besonders bevorzugt eine Kontaktlinse, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, jeder der Reste R¹ unabhängig voneinander für Wasserstoff, R² oder R⁷ steht, wobei von den (3 mal n) Resten R¹ 50 % bis 100 % eines Drittels dieser Reste die Bedeutung von R⁷ haben, während die anderen Reste R¹ die Bedeutung von Wasserstoff oder R² haben, worin R² für unsubstituiertes Alkyl steht, R⁷ für einen zwei- oder mehrwertigen Rest der Formel VI steht, worin x für eine Zahl von 1 bis 500 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

Die vorliegende Erfindung betrifft daher in ganz besonderem Masse eine Kontaktlinse, die ein vernetztes lipophilisiertes Cyclodextrin-Derivat enthält, welches gekennzeichnet ist durch sich wiederholende Untereinheiten der Formel VII, 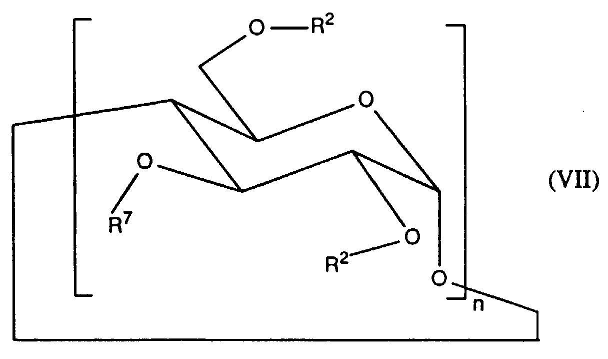 worin n eine Zahl von 6 bis 15 bedeutet, worin R² für unsubstituiertes Alkyl steht, und worin R⁷ für einen zweiwertigen Rest der Formel VIII steht, 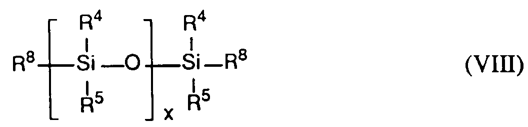 worin x für eine Zahl von 1 bis 500 steht, R⁴ und R⁵ unabhängig voneinander Alkyl oder Phenyl bedeuten und R⁸ für Alkylen steht. Der Index n bedeutet in einer Verbindung der Formel VII vorzugsweise 6, 7 oder 8.

Gleichermassen betrifft die vorliegende Erfindung auch eine Kontaktlinse, die ein vernetztes lipophilisiertes Cyclodextrin-Derivat enthält, welches gekennzeichnet ist durch sich wiederholende Untereinheiten der Formel VII, wie vorstehend definiert, worin R⁷ für einen zwei- oder mehrwertigen Rest der Formel VI steht, wie weiter vorstehend definiert, worin x für eine Zahl von 1 bis 500 steht, worin die Reste R⁴, R⁵ und R⁸ Wasserstoff, Alkyl, Alkylen oder Phenyl bedeuten, mit der Massgabe, dass mindestens zwei der Reste R⁴, R⁵ und R⁸ Alkylen bedeuten und maximal etwa 25 % der Reste R⁴, R⁵ und R⁸ Wasserstoff bedeuten.

Insbesondere betrifft die vorliegende Erfindung eine Kontaktlinse, die ein vernetztes lipophilisiertes Cyclodextrin-Derivat enthält, welches gekennzeichnet ist durch sich wiederholende Untereinheiten der Formel VII, worin R⁷ für einen zweiwertigen Rest der Formel VIII steht, worin n eine der Zahlen 6, 7 oder 8 bedeutet,
worin R² für Niederalkyl mit 4 bis 7 Kohlenstoffatomen steht,
worin x für eine Zahl von 1 bis 200 steht, R⁴ und R⁵ unabhängig voneinander Niederalkyl mit bis zu 7 Kohlenstoffatomen oder Phenyl bedeuten und worin R⁸ für Niederalkylen mit 3 bis 6 Kohlenstoffatomen steht.

Die Cyclodextrine, von denen eine Teilformel in der Formel A dargestellt ist, sind käuflich, ebenso die Hydrogen-Polysiloxane der Formel II bzw. IV. Die Verbindungen der Formel II bzw. IV, soweit nicht käuflich, können auf an sich bekannte Weise hergestellt werden.

Die vernetzten lipophilisierten Cyclodextrin-Derivate, aus denen die erfindungsgemässen Kontaktlinsen herstellt werden können, lassen sich beispielsweise wie folgt erhalten:

Die Reste R² und R³ werden in ein Cyclodextrin geeigneterweise durch Alk(en)ylierung eingeführt. Dies kann gleichzeitig mit einem Gemisch von Alkylierungsmittel und Alkenylierungsmittel geschehen oder sequentiell mit einem Alkylierungsmittel und mit einem Alkenylierungsmittel. Beispielsweise kann ein Cyclodextrin zuerst in eine Verbindung der Formel I übergeführt werden, worin zwei Drittel der Reste R¹ Alkyl bedeuten und das verbleibende Drittel der Reste R¹ Wasserstoff bedeutet. Daran kann sich durch Umsetzung mit einem Alkenylierungsmittel die Ueberführung der Reste R¹, die Wasserstoff bedeuten, in Reste R³ anschliessen.

Alternativ kann ein Cyclodextrin zuerst in eine Verbindung der Formel I übergeführt werden, worin zwei Drittel der Reste R¹ Alkyl bedeuten und das verbleibende Drittel der Reste R¹ Wasserstoff bedeutet. Daran kann sich durch Umsetzung mit einem Gemisch eines Alkylierungsmittels und eines Alkenylierungsmittels die Ueberführung der Reste R¹, die Wasserstoff bedeuten, in Reste R² oder R³ anschliessen.

Unter Alkylierungsmitteln respektive Alkenylierungsmitteln werden reaktionsfähige Ester der jeweiligen Alkyl- bzw. Alkenylverbindungen verstanden, z.B. Sulfonsäureester oder Halogenwasserstoffsäureester, wie Alkyl- bzw. Alkenylsulfonate oder -bromide, insbesondere z.B. Niederalkylbromide wie 1-Brom-n-pentan oder 1-Brom-n-penten.

Die Alkylierung oder Alkenylierung erfolgt unter hierfür typischen und dem Fachmann vertrauten Bedingungen, beispielsweise in einem inerten Lösungsmittel, wie einem Ether, z.B. Tetrahydrofuran, bei einer Temperatur zwischen 0°C und der Siedetemperatur des verwendeten Lösungsmittels und gegebenenfalls unter Schutzgas, wie Stickstoffatmosphäre.

Im Ergebnis wird auf diese Weise ein Cyclodextrin-Derivat erhalten, das pro Makromolekül mindestens eine Kohlenstoff-Kohlenstoff-Doppelbindung aufweist, bevorzugterweise pro Makromolekül 6, 7 oder 8 derartige Doppelbindungen, d.h. gleich viele wie es der bevorzugten Bedeutung des Index n in Formel I entspricht.

Die so erhaltenen Cycledextrin-Derivate der Formel I werden anschliessend mit einer Verbindung der Formel II umgesetzt. Hierzu werden entweder etwa äquimolare Mengen verwendet, bezogen auf die Anzahl von Kohlenstoff-Kohlenstoff-Doppelbindungen in den Verbindungen der Formel I und die Anzahl von Silicium-Wasserstoff-Bindungen in Verbindungen der Formel II, oder ein molarer Ueberschuss der einen oder der anderen Komponente. Hierbei kann sich jeweils eine Si-H-Bindung an eine C-C-Doppelbindung addieren. Auf diese Weise werden die Cyclodextrin-Derivate der Formel I über Siloxanbrücken miteinander vernetzt.

Auch diese Reaktion findet auf an sich bekannte Weise statt, z.B. gemäss J.L. Speier, Adv. Organomet. Chem. 17, 407 (1979). So verwendet man vorzugsweise ein inertes Lösungsmittel, wie einen Kohlenwasserstoff, z.B. Toluol, bei einer Temperatur zwischen 0°C und der Siedetemperatur des verwendeten Lösungsmittels und gegebenenfalls Schutzgas, wie eine Stickstoffatmosphäre. Ueblicherweise wird diese Reaktion in Gegenwart eines Katalysators durchgeführt. Besonders geeignete Katalysatoren sind Platin, Platinverbindungen oder Platinkomplexe, wie z.B. cis-bis-(Styrolo)-dichloro-Platin.

Die Reaktionsdauer dieser Umsetzung liegt, je nach den Umständen, innerhalb einer Zeitspanne von wenigen Minuten bis zu einigen Tagen, z.B. zwischen 2 Minuten und 5 Tagen.

Die Hydrosilierungsreaktion, die zu einer Polymerisation führt, kann beispielsweise auf einer rotierenden Platte, die auf eine Temperatur von bis zu etwa 100°C erhitzt wird, durchgeführt werden. Auf diese Weise lassen sich Filme von unterschiedlicher Dicke erhalten, die ein lipophilisiertes Cyclodextrin-Polysiloxan-Netzwerk darstellen. Bei diesem Netzwerk handelt es sich um das aus den Verbindungen der Formel I und II erhältliche vernetzte lipophilisierte Cyclodextrin-Derivat, aus dem die erfindungsgemässen Kontaktlinsen hergestellt werden können.

Zur Verbesserung der mechanischen Eigenschaften können den Netzwerken, und damit auch den erfindungsgemässen Kontaktlinsen, Füllstoffe zugesetzt werden, beispielsweise amorphes Quartzpulver, wie Aerosil, beispielsweise mit einer Korngrösse von 10 bis 100 nm, oder Titandioxid.

Die Netzwerke können auch auf andere an sich bekannte Weise, beispielsweise in Zylinderform, polymerisiert werden, beispielsweise indem man sie in geschlossenen zylindrischen Formen (Rohren) einem Temperaturprogramm unterwirft, bei dem die Temperatur von 30°C stufenweise bis etwa 100°C erhöht wird. Die Temperaturstufen können z.B. zwischen 5 und 10°C betragen, mit einer Verweildauer von 1 bis 12 Stunden pro Temperatur. Üblich sind zwei- oder fünfstündige Intervalle, es können einzelne Temperaturen jedoch auch bis zu 20 Stunden gehalten werden. Üblicherweise wird am Ende 1 bis 15 Stunden bei Temperaturen zwischen 80 und 130°C getempert.

Auch die Herstellung von erfindungsgemässen Kontaktlinsen kann auf an sich bekannte Weise erfolgen. Dazu werden z.B. die Verbindungen der Formel I und II in zylindrischer Form polymerisiert, und die erhältlichen Stäbe nach Entformung in Scheiben oder Knöpfe zerteilt, die weiter mechanisch bearbeitet werden können, insbesondere durch Drehverfahren. Darüberhinaus können die erfindungsgemässen Linsen auch nach anderen an sich bekannten Verfahren wie Giessen in statischen Formen, Rotationsgiessen, Verpressen, Tiefziehen, Warmformen, Drehen oder Laserbearbeitung hergestellt werden. Diese Verfahrensschritte sind an sich bekannt und bedürfen daher für den Fachmann keiner detaillierten Erläuterung.

Die Herstellung erfolgt vorzugsweise aber nicht notwendigerweise unter einer inerten Atmosphäre, wenn sie in offenen Formen durchgeführt wird. Werden geschlossene Formen zur Bildung des Polymerisats verwendet, so bestehen die Formen vorteilhafterweise aus inerten Materialien mit niedriger Sauerstoffdurchlässigkeit und mit nicht-klebenden Eigenschaften. Beispiele für geeignete Formmaterialien sind Polytetrafluorethylen, wie Teflon®, Silikonkautschuk, Polyethylen, Polypropylen und Polyester wie Mylar®. Bei Einsatz eines geeigneten Entformungsmittels sind auch Formen aus Glas und Metall verwendbar.

Giessen in statischen Formen kann beispielsweise, wenn Formen mit Innenkurve und Aussenkurve verwendet werden, unmittelbar zu Kontaktlinsen führen. So können Kontaktlinsen durch Polymerisation der Verbindungen der Formel I und II in geeigneten Formen direkt ("full mold"-Verfahren) oder mit nur einer fertigen Fläche ("semi mold"-Verfahren) hergestellt werden.

Rotationsgiessen (spin casting) lässt sich erfindungsgemäss ebenfalls anwenden, indem eine Lösung der Verbindungen der Formel I und II in eine Form für Rotationsguss eingebracht wird, worauf die Form in Rotation versetzt wird. Dabei verdampft das Lösungsmittel. Die fertige Kontaktlinse, deren Abmessungen sich durch die Abmessungen der Form, die Rotationsgeschwindigkeit und die Viskosität der eingebrachten Lösung steuern lassen, bleibt in der Form zurück.

Verpressen geschieht erfindungsgemäss z.B. durch Formpressen einer Folie aus dem Netzwerk. Eine Folie aus dem Netzwerk kann wie vorstehend beschrieben oder auf an sich bekannte Weise beispielsweise durch Giessen einer Lösung der Verbindungen der Formel I und II hergestellt werden.

Aus einer z.B. wie vorstehend erwähnt hergestellten Folie kann eine Kontaktlinse auch auf an sich bekannte Weise durch Tiefziehen oder Warmformen hergestellt werden.

Drehen bietet sich als letzter Verfahrensschritt zur Herstellung von erfindungsgemässen Kontaktlinsen ebenfalls an. Dies gilt immer dann, wenn ein z.B. nach einem der vorstehend genannten Verfahren erhältlicher Rohling noch weiterer Bearbeitung bedarf. Unter Drehen wird das an sich bekannte spanabhebende Bearbeitungsverfahren von Kontaktlinsen-Rohlingen verstanden. Entsprechende Rohlinge lassen sich z.B. durch Extrusion von Rundstäben und deren Zerteilen oder Giessen aus einer Lösung herstellen. Unter den Begriff Kontaktlinsen-Rohling fallen in diesem Zusammenhang Knöpfe (buttons) oder semi-mold-Produkte, wie z.B. Innenkurvenrohlinge. Typische Rohlinge weisen Dicken von 4 oder 6 mm und Durchmesser von 10 bis 17, z.B. 12 oder 14 mm auf.

Auch die Laserbearbeitung lässt sich erfindungsgemäss anwenden, wobei man von Rohlingen oder nach einem der anderen Verfahren hergestellten Kontaktlinsen ausgeht, sofern letztere noch einer zusätzlichen Feinbearbeitung ihrer Oberfläche bedürfen.

Die nachfolgenden Beispiele erläutern den Gegenstand der Erfindung, ohne ihn jedoch, etwa auf den Umfang der Beispiele, zu beschränken. Prozente bei Mengenangaben sind Gewichtsprozente soweit nicht ausdrücklich anders angegeben. Temperaturen werden in Grad Celsius angegeben.

Kontaktwinkel werden nach dem folgenden Verfahren bestimmt: Die Kontaktlinse wird mit Aceton gereinigt. In der Messkammer des Kontaktwinkel-Messmikroskops wird ein Tropfen destilliertes Wasser auf die Oberfläche der Kontaktlinse gebracht. Der sich ausbildende Tropfen wird gegen die Oberfläche der Kontaktlinse vermessen.

Sauerstoffdurchlässigkeiten (Dk-Werte) werden in der Einheit "[cm³O₂·cm²/cm²·sec·mmHg]" angegeben, Sauerstofftransmissibilitäten in der Einheit "[mlO₂·cm/ml·sec·mmHg]".

Beispiel 1: Heptakis-(2,6-di-O-n-pentyl)-β-cyclodextrin wird aus β-Cyclodextrin auf an sich bekannte Weise hergestellt (z.B. gemäss Carbohydrate Research 214, 257 (1991)). Diese Verbindung wird unter Stickstoff während 4 Tagen in Tetrahydrofuran mit Natriumhydrid und 1-Brompent-4-en unter Rückfluss erhitzt. Das Reaktionsprodukt, Heptakis-(2,6-di-O-n-pentyl-3-O-(ω-pentenyl))-β-cyclodextrin, wird nach Aufarbeitung und Säulenchromatographie, bei der Silicagel Merck Si-60 und Petrolether / tert.-Butyl-methylether (88:12 v/v) verwendet wird, in einer Ausbeute von 68 % erhalten. Die ¹H-NMR-Daten stützen die vorgeschlagene Konfiguration.

Im folgenden Schritt werden die 7 Kohlenstoff-Kohlenstoff-Doppelbindungen pro β-Cyclodextrin vernetzt. Dazu wird Heptakis-(2,6-di-O-n-pentyl-3-O-(ω-pentenyl))-β-cyclodextrin mit einer äquivalenten Menge α,ω-Dihydrogen-polydimethylsiloxan, Polymerisierungsgrad = 20, hergestellt gemäss S.W. Kantor et al., J. Am. Chem. Soc. 76, 5190 (1954), in einer kleinen Menge Toluol unter Stickstoff gelöst. 1 ·10⁻⁴ Molprozent cis-bis-(Styrolo)-dichloro-platin, hergestellt gemäss A. Albinati et al., Organo Metallics 6, 788 (1987) werden als Katalysator zugesetzt. Diese Lösung ist bei 20°C 7 Tage stabil. Zum Einleiten der Hydrosilylierungsreaktion wird diese Lösung auf eine heisse rotierende Scheibe gegossen. Bei einer Temperatur von 60°C ist die Reaktion nach 2 Minuten abgeschlossen. Ein farbloser, tranparenter, gummiartiger Film des lipophilisierten Cyclodextrin-Siloxan-Netzwerks wird erhalten. Der Film hat eine Dicke von 50 bis 200 µm und enthält bis zu 15 % β-Cyclodextrin.

Beispiel 2: Hexakis-(2,6-di-O-n-pentyl)-a-cyclodextrin wird aus α-Cyclodextrin auf an sich bekannte Weise hergestellt. Ein Gemisch dieser Verbindung mit Natriumhydrid in Tetrahydrofuran und einer 1:5-Mischung (mol/mol) von 1-Brom-n-pent-4-en und 1-Brom-n-pentan wird 4 Tage unter Rückfluss erhitzt. Als Hauptprodukt wird in 74 % Ausbeute, nach Aufarbeitung und Säulenchromatographie, bei der Silicagel Merck Si-60 und Petrolether / tert.-Butyl-methylether (90:10 v/v) verwendet wird, Hexakis-(2,6-di-O-n-pentyl)-3A-O-(ω-pentenyl)-3B,3C,3D,3E,3F-penta-O-n-pentyl-α-cyclodextrin erhalten. Die ¹H-NMR-Daten stützen die vorgeschlagene Konfiguration.

Für die Hydrosilylierungsreaktion wird ein lineares statistisches co-(Dimethylsiloxan)-(Hydromethylsiloxan)-Polymer (PS 123.5 von Petrarch) verwendet, das 9,8 Mol% Hydromethylsiloxan-Einheiten enthält (In der nachfolgenden Tabelle als "Probe 1" bezeichnet). Analog zu Beispiel 1 wird das Siloxan, in Gegenwart von cis-bis-(Styrolo)-dichloro-platin als Katalysator, mit dem monofunktionalisierten α-Cyclodextrin umgesetzt.

In einem ersten Experiment werden 1 Aequivalent Si-H-Gruppen des Siloxans bei 60°C in Toluol mit 0,5 Aequivalenten C-C-Doppelbindungen des funktionalisierten α-Cyclodextrins behandelt. Das aus diesem Experiment erhaltene Produkt wird in der nachfolgenden Tabelle als "Probe 2" bezeichnet. In einem zweiten Experiment werden die Verbindungen in einem Verhältnis von 1 : 1,1 angewendet. Das aus diesem Experiment erhaltene Produkt wird in der nachfolgenden Tabelle als "Probe 3" bezeichnet. Die Umsetzungen sind nach 5 Tagen nahezu abgeschlossen. Die Reaktionsgemische werden mit Wasser gewaschen. Unter Verwendung von präparativer Gelpermeationschromatographie (GPC) mit einer Styragel HPLC-Säule und Tetrahydrofuran werden die Produkte aus den beiden Experimenten isoliert. Die Zusammensetzung der Copolymere wird mittels ¹H-NMR-Spektroskopie ermittelt. Dabei werden die Integrale der Signale bei δ = 4,67 ppm (CH₃Si-H), bei δ = 0,49 ppm (CH₃Si-(CH₂)-) und δ = 0,06 ppm (CH₃Si) ausgewertet, um den Gehalt an nicht abreagierten Hydromethyl-Siloxan-Einheiten, Einheiten mit gebundenen Cyclodextrinen und Dimethylsiloxan-Einheiten zu ermitteln, siehe Tabelle zu diesem Beispiel. Das Molekulargewicht der Polymere wurde durch GPC in Toluol gemessen, wobei eine PDMS-Kalibrierung (Polydimethylsiloxan-Kalibrierung) verwendet wurde.

### Tabelle zu Beispiel 2:

Zusammensetzung und Molekulargewicht der Polymere Proben 1 bis 3

| Probe | K* | L* | M* | MW* (GPC) |
|---|---|---|---|---|
| 1 | 90 % | 9,8 % | - | 2336 |
| 2 | 90 % | 4,5 % | 5,4 % | 4850 |
| 3 | 90 % | 0,1 % | 9,6 % | 5872 |

| | | | | |
|---|---|---|---|---|
| * K: Gehalt an Dimethylsiloxan-Einheiten, L: Gehalt an nicht abreagierten Hydromethyl-Siloxan-Einheiten, M: Gehalt an Einheiten mit gebundenen Cyclodextrinen, MW: Molekulargewicht, mit GPC ermittelt | | | | |

Beispiel 3: Aus dem gemäss Beispiel 1 erhältlichen modifizierten Cyclodextrin wird wie folgt eine Kontaktlinse hergestellt: Die beschriebene Lösung, die bei 20°C 7 Tage stabil ist, wird in eine geometriestabile Form (Mold) gebracht. Die Form wird verschlossen und erwärmt. Die Erwärmung kann durch Wärmestrahlung (Infrarot), in einem Wasserbad, oder bei Metallformen in induktiver Weise erfolgen. Soweit es die Moldmaterialien gestatten, kann die Vernetzung auch unter Druck erfolgen.

Die Reaktion ist bei den nachstehend angegebenen Temperaturen nach folgenden Zeiten abgeschlossen:

| | | | | | | |
|---|---|---|---|---|---|---|
| Temperatur (°C) | 30 | 40 | 50 | 60 | 80 | 100 |
| Zeit (h) | 48 | 6 | 1 | 0.5 | 0.25 | 0.1 |

Beispiel 4: Analog zu Beispiel 3 werden Kontaktlinsen aus einem Cyclodextrin-Siloxan-Netzwerk hergestellt, das aus der Umsetzung von Verbindungen der Formel m mit Verbindungen der Formel IV erhalten wurde, worin die Variablen der Formel III die folgenden Bedeutungen aufweisen: n bedeutet 7, die beiden Reste R² bedeuten Pentyl und R³ bedeutet Allyl, und worin die Variablen der Formel IV die folgenden Bedeutungen aufweisen: R⁴ und R⁵ bedeuten Methyl, und x steht für die Zahlen 5, 11, 17, 37, 41, 82 oder 100. Nachstehend werden für die jeweiligen hergestellten Kontaktlinsen die folgenden Parameter angegeben:

Wert des Index x, Verhältnis von eingesetzten Si-H-Bindungen zu C-C-Doppelbindungen (nachfolgend stets als "SiH/CC" bezeichnet), Gewichtsanteil der Cyclodextrin-Verbindungen der Formel III (nachfolgend stets als "% CDX" bezeichnet), Gewichtsanteil der Polydimethylsiloxan-Verbindung der Formel IV (nachfolgend stets als "% PDMS" bezeichnet). Ferner werden, soweit sie ermittelt wurden, der Kontaktwinkel, der Dk-Wert und der Dk/L-Wert angegeben.
a) x = 5, SiH/CC = 1,94, % CDX = 47 %, % PDMS = 53 %:
   Kontaktwinkel 85°, Dk-Wert 200, Dk/L-Wert 126.
b) x = 5, SiH/CC = 0,96, % CDX = 64 %, % PDMS=36 %:
   Kontaktwinkel 95°, Dk-Wert 78, Dk/L-Wert 56.
c) x = 11, SiH/CC = 1, 26, % CDX = 38 %, % PDMS = 62 %:
   Kontaktwinkel 80°, Dk-Wert 163, Dk/L-Wert 115.
d) x = 17, SiH/CC= 1,00, % CDX = 33 %, % PDMS = 67 %:
   Kontaktwinkel 80°, Dk-Wert 236, Dk/L-Wert 130.
e) x = 37, SiH/CC = 0,53, % CDX = 32 %, % PDMS = 68 %:
   Kontaktwinkel 950, Dk-Wert 326, Dk/L-Wert 113.
f) x = 41, SiH/CC = 1,07, % CDX = 17 %, % PDMS = 83%:
   Kontaktwinkel 96°.
g) x = 82, SiHCC = 1,02, % CDX = 10 %, % PDMS = 90 %:
   Kontaktwinkel 97°
h) x = 100, SiH/CC = 0,97, % CDX = 9 %, % PDMS = 91 %.

Beispiel 5: Analog zu Beispiel 3 werden Kontaktlinsen aus einem Cyclodextrin-Siloxan-Netzwerk hergestellt, das aus der Umsetzung von Verbindungen der Formel III mit Verbindungen der Formel II erhalten wurde, worin die Variablen der Formel III die Bedeutungen wie in Beispiel 4 aufweisen. Als Verbindung der Formel II wird lineares statistisches co-(Phenylmethylsiloxan)-(Hydromethylsiloxan)-Polymer 50:50, Mₙ = 1146, (PS 129.5 von Petrarch) verwendet, das etwa 50 Mol% Hydromethylsiloxan-Einheiten enthält. Nachstehend werden analog zu Beispiel 4 die weiteren Parameter angegeben:
SiH/CC = 1,05, % CDX = 46 %, % PDMS = 54 %:
Kontaktwinkel 94°.

Beispiel 6: Analog zu Beispiel 3 werden Kontaktlinsen aus einem Cyclodextrin-Siloxan-Netzwerk hergestellt, das aus der Umsetzung von Verbindungen der Formel III mit Verbindungen der Formel II erhalten wurde, worin die Variablen der Formel III die folgenden Bedeutungen aufweisen: n bedeutet 7, die beiden Reste R² bedeuten Pentyl und R³ bedeutet Pentenyl, und worin die Variablen der Formel II die folgenden Bedeutungen aufweisen: R⁶ bedeutet Wasserstoff, R⁴ bedeutet Wasserstoff oder Methyl nd R⁵ bedeutet Methyl, x steht für die Zahlen 5, 11, 17 oder 37. Nachstehend werden, wie bei Beispiel 4, die für die jeweiligen hergestellten Kontaktlinsen weiteren Parameter angegeben:
a) x = 5, SiH/CC = 1,01, % CDX = 65 %, % PDMS = 35 %:
   Kontaktwinkel 90°, Dk-Wert 158, Dk/L-Wert 116.
b) x = 11, SiH/CC= 1,29, % CDX = 40 %, % PDMS = 60 %:
   Kontaktwinkel 87°.
c) x = 17, SiH/CC = 0,52, % CDX = 50 %, % PDMS = 50 %:
   Dk-Wert 215, Dk/L-Wert 127.
d) x = 17, SiH/CC = 1,01, % CDX = 34 %, % PDMS = 66 %:
   Kontaktwinkel 100°, Dk-Wert 362, Dk/L-Wert 143.
e) x = 37, SiH/CC = 0,55, % CDX = 32 %, % PDMS = 68 %:
   Kontaktwinkel 100°, Dk-Wert 476, Dk/L-Wert 149.
f) x = 37, SiH/CC = 0,50, % CDX = 35 %, % PDMS = 65 %:
   Dk-Wert 425, Dk/L-Wert 160.

Beispiel 7: Analog zu Beispiel 3 werden Kontaktlinsen aus einem Cyclodextrin-Siloxan-Netzwerk hergestellt, das aus der Umsetzung von Verbindungen der Formel III mit Verbindungen der Formel II erhalten wurde, worin die Variablen der Formel III die Bedeutungen wie in Beispiel 6 aufweisen. Als Verbindung der Formel II wird lineares statistisches co-(Phenylmethylsiloxan)-(Hydromethylsiloxan)-Polymer 50:50, Mₙ = 1146, (PS 129.5 von Petrarch) verwendet, das etwa 50 Mol% Hydromethylsiloxan-Einheiten enthält. Nachstehend werden analog zu Beispiel 4 die weiteren Parameter angegeben:
SiH/CC= 1,05, % CDX = 48 %, % PDMS = 52 %.

Beispiel 8: Analog zu Beispiel 3 werden Kontaktlinsen aus einem Cyclodextrin-Siloxan-Netzwerk hergestellt, das aus der Umsetzung von Verbindungen der Formel I mit Verbindungen der Formel IV erhalten wurde, worin die Variablen der Formel I die folgenden Bedeutungen aufweisen: n bedeutet 7, die beiden Reste R¹ in Position 2 und 6 bedeuten Pentyl, 40 % der Reste R¹ in Position 3 bedeuten Pentyl und 60 % der Reste R¹ in Position 3 bedeuten Pentenyl, und worin die Variablen der Formel IV die folgenden Bedeutungen aufweisen: R⁴ und R⁵ bedeuten Methyl, und x steht für die Zahlen 5, 11, 17, 37, 82 oder 100. Nachstehend werden, wie bei Beispiel 4, die für die jeweiligen hergestellten Kontaktlinsen weiteren Parameter angegeben:
a) x = 5, SiH/CC = 1,05, % CDX = 75 %, % PDMS = 25 %:
   Kontaktwinkel 95°.
b) x = 11, SiH/CC = 1,27, % CDX = 53 %, % PDMS = 47 %:
   Kontaktwinkel 79°.
c) x = 17, SiH/CC = 0,97, % CDX = 47 %, % PDMS = 53 %.
d) x = 37, SiH/CC = 0,91, % CDX = 33 %, % PDMS = 67 %.
e) x = 82, SiH/CC = 1,01, % CDX = 17 %, % PDMS = 83 %:
   Kontaktwinkel 100°.
f) x = 100, SiH/CC = 0,99, % CDX = 14 %, % PDMS = 86 %:
   Kontaktwinkel 100°.

Beispiel 9: Analog zu Beispiel 3 werden Kontaktlinsen aus einem Cyclodextrin-Siloxan-Netzwerk hergestellt, das aus der Umsetzung von Verbindungen der Formel I mit Verbindungen der Formel II erhalten wurde, worin die Variablen der Formel I die Bedeutungen wie in Beispiel 8 aufweisen. Als Verbindung der Formel II wird lineares statistisches co-(Phenylmethylsiloxan)-(Hydromethylsiloxan)-Polymer 50:50, Mₙ= 1146, (PS 129.5 von Petrarch) verwendet, das etwa 50 Mol% Hydromethylsiloxan-Einheiten enthält. Nachstehend werden analog zu Beispiel 4 die weiteren Parameter angegeben:
SiH/CC = 2,11, % CDX = 43 %, % PDMS = 57 %:
Kontaktwinkel 90°.

Beispiel 10: Analog zu Beispiel 3 werden Kontaktlinsen aus einem Cyclodextrin-Siloxan-Netzwerk hergestellt, das aus der Umsetzung von Verbindungen der Formel I mit Verbindungen der Formel IV erhalten wurde, worin die Variablen der Formel I die folgenden Bedeutungen aufweisen: n bedeutet 7, zwei von den drei Resten R¹ bedeuten Pentenyl und die verbleibenden Reste R¹ bedeuten Wasserstoff, und worin die Variablen der Formel IV die folgenden Bedeutungen aufweisen: R⁴ und R⁵ bedeuten Methyl, und x steht für die Zahlen 2, 5, 11, 82 oder 100. Nachstehend werden, wie bei Beispiel 4, die für die jeweiligen hergestellten Kontaktlinsen weiteren Parameter angegeben:
a) x = 2, SiH/CC = 0,98, % CDX = 69 %, % PDMS = 31 %:
   Dk-Wert 20, Dk/L-Wert 30.
b) x = 5, SiH/CC = 1,28, % CDX = 37 %, % PDMS = 63 %:
   Kontaktwinkel 93°.
c) x = 11, SiH/CC = 1,04, % CDX = 25 %, % PDMS = 75 %.
d) x = 82, SIH/CC = 1,05, % CDX = 4 %, % PDMS = 96 %:
   Kontaktwinkel 96°.
e)x= 100, SiH/CC = 0,25, % CDX = 14 %, % PDMS =86 %.
f) x = 100, SiH/CC = 0,59, % CDX = 6 %, % PDMS = 94 %.

Beispiel 11: Analog zu Beispiel 3 werden Kontaktlinsen aus einem Cyclodextrin-Siloxan-Netzwerk hergestellt, das aus der Umsetzung von Verbindungen der Formel I mit Verbindungen der Formel II erhalten wurde, worin die Variablen der Formel I die Bedeutungen wie in Beispiel 10 aufweisen. Als Verbindung der Formel II wird lineares statistisches co-(Phenylmethylsiloxan)-(Hydromethylsiloxan)-Polymer 50:50, Mₙ = 1146, (PS 129.5 von Petrarch) verwendet, das etwa 50 Mol% Hydromethylsiloxan-Einheiten enthält. Nachstehend werden analog zu Beispiel 4 die weiteren Parameter angegeben:
SiH/CC = 0,21, % CDX = 65 %, % PDMS = 35 %:
Kontaktwinkel 86°.

## Patentansprüche

1. Eine Kontaktlinse, die ein vernetztes lipophilisiertes Cyclodextrin-Derivat enthält, welches gekennzeichnet ist durch sich wiederholende Untereinheiten der Formel V, 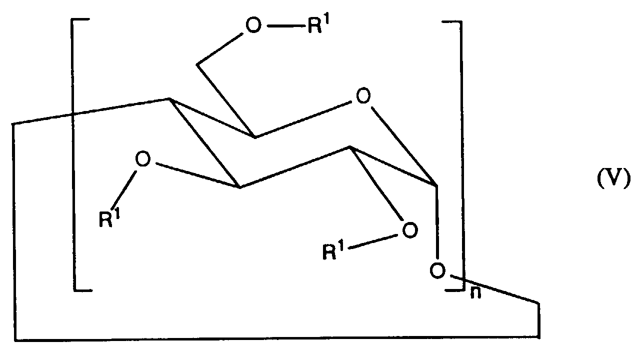 worin n eine Zahl von 6 bis 15 bedeutet, jeder der Reste R¹ unabhängig voneinander für Wasserstoff, R² oder R⁷ steht, wobei von den (3 mal n) Resten R¹ mindestens ein Rest R¹ die Bedeutung von R⁷ hat und die verbleibenden Reste R¹ für Wasserstoff stehen oder die Bedeutung von R² haben,
worin R² für unsubstituiertes oder durch Halogen substituiertes Alkyl oder für durch Alkyl substituiertes Aryl steht, und worin R⁷ für einen zwei- oder mehrwertigen Rest der Formel VI steht 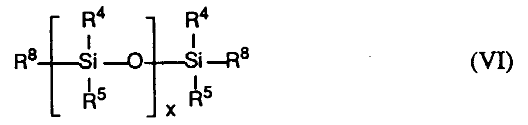 worin x für eine Zahl von 1 bis 10000 steht, R⁴, R⁵ und R⁸ unabhängig voneinander Wasserstoff, Alkyl, unsubstituiertes oder durch Halogen substituiertes Alkylen oder Alkenylen, Phenyl oder Hydroxy bedeuten, mit der Massgabe dass in einem Rest der Formel VI mindestens zwei der Reste R⁴, R⁵ und R⁸ unsubstituiertes oder durch Halogen substituiertes Alkylen oder Alkenylen bedeuten.

2. Eine Kontaktlinse gemäss Anspruch 1, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, jeder der Reste R¹ unabhängig voneinander für Wasserstoff, R² oder R⁷ steht, wobei von den (3 mal n) Resten R¹ mindestens ein Rest R¹ die Bedeutung von R⁷ hat und die verbleibenden Reste R¹ für Wasserstoff stehen oder die Bedeutung von R² haben,
worin R² für unsubstituiertes Alkyl steht, worin R⁷ für einen zwei- oder mehrwertigen Rest der Formel VI steht, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

3. Eine Kontaktlinse gemäss Anspruch 1, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, die Reste R¹ in 2-Position und in 6-Position unsubstituiertes Alkyl bedeuten, die Reste R¹ in 3-Position die Bedeutung von R⁷ haben, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

4. Eine Kontaktlinse gemäss Anspruch 1, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, die Reste R¹ in 2-Position und in 6-Position unsubstituiertes Alkyl bedeuten und die Reste R¹ in 3-Position zu mindestens 50 % die Bedeutung von R⁷ haben, während der verbleibende Prozentsatz Reste R¹ in 3-Position unsubstituiertes Alkyl bdeutet, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

5. Eine Kontaktlinse gemäss Anspruch 1, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, die Reste R¹ in 3-Position Wasserstoff bedeuten, die Reste R¹ in 2-Position und in 6-Position die Bedeutung von R⁷ haben, worin x für eine Zahl von 1 bis 1000 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

6. Eine Kontaktlinse gemäss Anspruch 1, die ein vernetztes lipophilisiertes Cyclodextrin-Derivat enthält, welches gekennzeichnet ist durch sich wiederholende Untereinheiten der Formel V, worin n eine Zahl von 6 bis 15 bedeutet, jeder der Reste R¹ unabhängig voneinander für Wasserstoff, R² oder R⁷ steht, wobei von den (3 mal n) Resten R¹ 50 % bis 100 % eines Drittels dieser Reste die Bedeutung von R⁷ haben, während die anderen Reste R¹ die Bedeutung von Wasserstoff oder R² haben, worin R² für unsubstituiertes Alkyl steht, R⁷ für einen zwei- oder mehrwertigen Rest der Formel VI steht, worin x für eine Zahl von 1 bis 500 steht und R⁴, R⁵ und R⁸ unabhängig voneinander Wasserstoff, Alkyl, Alkylen oder Phenyl bedeuten, wobei mindestens zwei der Reste R⁴, R⁵ und R⁸ Alkylen bedeuten.

7. Eine Kontaktlinse gemäss Anspruch 1, die ein vernetztes lipophilisiertes Cyclodextrin-Derivat enthält, welches gekennzeichnet ist durch sich wiederholende Untereinheiten der Formel VII, 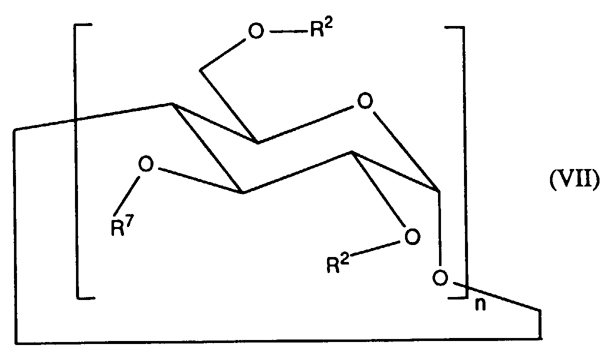 worin n eine Zahl von 6 bis 15 bedeutet, worin R² für unsubstituiertes Alkyl steht, und worin R⁷ für einen zweiwertigen Rest der Formel VIII steht, 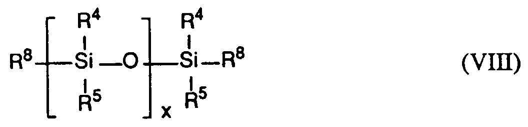 worin x für eine Zahl von 1 bis 500 steht, R⁴ und R⁵ unabhängig voneinander Alkyl oder Phenyl bedeuten und R⁸ für Alkylen steht.

8. Eine Kontaktlinse gemäss Anspruch 1, die ein vernetztes lipophilisiertes Cyclodextrin-Derivat enthält, welches gekennzeichnet ist durch sich wiederholende Untereinheiten der Formel VII, wie in Anspruch 7 definiert, worin R⁷ für einen zwei- oder mehrwertigen Rest der Formel VI steht, wie in Anspruch 1 definiert, worin x für eine Zahl von 1 bis 500 steht, worin die Reste R⁴, R⁵ und R⁸ Wasserstoff, Alkyl, Alkylen oder Phenyl bedeuten, mit der Massgabe, dass mindestens zwei der Reste R⁴, R⁵ und R⁸ Alkylen bedeuten und maximal etwa 25 % der Reste R⁴, R⁵ und R⁸ Wasserstoff bedeuten.

9. Kontaktlinse gemäss Anspruch 7, die ein vernetztes lipophilisiertes Cyclodextrin-Derivat enthält, welches gekennzeichnet ist durch sich wiederholende Untereinheiten der Formel VII, worin R⁷ für einen zweiwertigen Rest der Formel VIII steht, worin n eine der Zahlen 6, 7 oder 8 bedeutet,
worin R² für Niederalkyl mit 4 bis 7 Kohlenstoffatomen steht,
worin x für eine Zahl von 1 bis 200 steht, R⁴ und R⁵ unabhängig voneinander Niederalkyl mit bis zu 7 Kohlenstoffatomen oder Phenyl bedeuten und worin R⁸ für Niederalkylen mit 3 bis 6 Kohlenstoffatomen steht.

10. Verfahren zur Herstellung einer Kontaktlinse gemäss Anspruch 1, dadurch gekennzeichnet, dass ein vernetztes lipophilisiertes Cyclodextrin-Derivat, welches gekennzeichnet ist durch sich wiederholende Untereinheiten der Formel V, 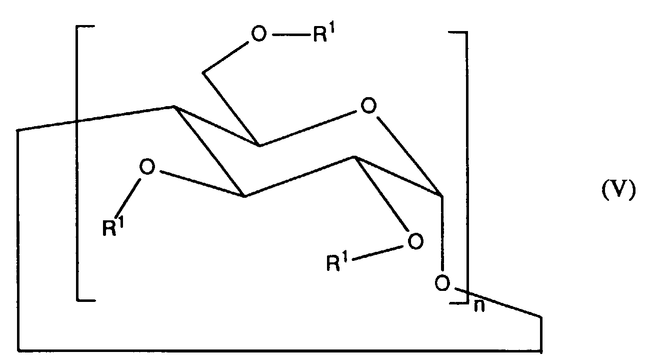 worin n eine Zahl von 6 bis 15 bedeutet, jeder der Reste R¹ unabhängig voneinander für Wasserstoff, R² oder R⁷ steht, wobei von den (3 mal n) Resten R¹ mindestens ein Rest R¹ die Bedeutung von R⁷ hat und die verbleibenden Reste R¹ für Wasserstoff stehen oder die Bedeutung von R² haben,
worin R² für unsubstituiertes oder durch Halogen substituiertes Alkyl oder für durch Alkyl substituiertes Aryl steht, und worin R⁷ für einen zwei- oder mehrwertigen Rest der Formel VI steht 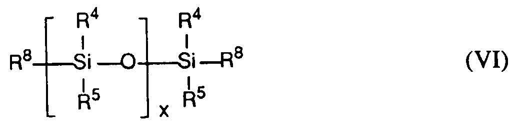 worin x für eine Zahl von 1 bis 10000 steht, R⁴, R⁵ und R⁸ unabhängig voneinander Wasserstoff, Alkyl, unsubstituiertes oder durch Halogen substituiertes Alkylen oder Alkenylen, Phenyl oder Hydroxy bedeuten, mit der Massgabe dass in einem Rest der Formel VI mindestens zwei der Reste R⁴, R⁵ und R⁸ unsubstituiertes oder durch Halogen substituiertes Alkylen oder Alkenylen bedeuten,
auf an sich bekannte Weise zu einer Kontaktlinse verarbeitet wird.

11. Verwendung eines vernetzten lipophilisierten Cyclodextrin-Derivates, welches gekennzeichnet ist durch sich wiederholende Untereinheiten der Formel V, 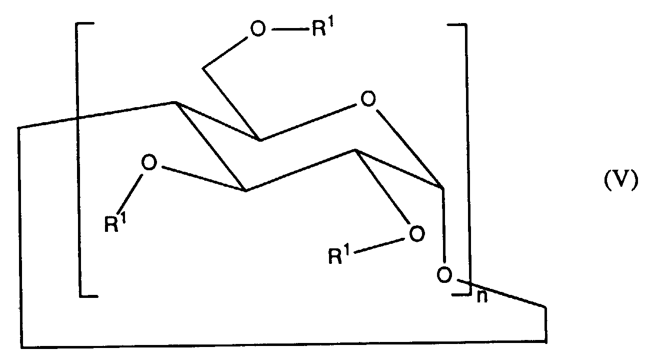 worin n eine Zahl von 6 bis 15 bedeutet, jeder der Reste R¹ unabhängig voneinander für Wasserstoff, R² oder R⁷ steht, wobei von den (3 mal n) Resten R¹ mindestens ein Rest R¹ die Bedeutung von R⁷ hat und die verbleibenden Reste R¹ für Wasserstoff stehen oder die Bedeutung von R² haben,
worin R² für unsubstituiertes oder durch Halogen substituiertes Alkyl oder für durch Alkyl substituiertes Aryl steht, und worin R⁷ für einen zwei- oder mehrwertigen Rest der Formel VI steht 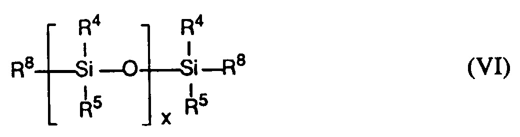 worin x für eine Zahl von 1 bis 10000 steht, R⁴, R⁵ und R⁸ unabhängig voneinander Wasserstoff, Alkyl, unsubstituiertes oder durch Halogen substituiertes Alkylen oder Alkenylen, Phenyl oder Hydroxy bedeuten, mit der Massgabe dass in einem Rest der Formel VI mindestens zwei der Reste R⁴, R⁵ und R⁸ unsubstituiertes oder durch Halogen substituiertes Alkylen oder Alkenylen bedeuten,
zur Herstellung einer Kontaktlinse.

12. Eine Kontaktlinse, die dadurch gekennzeichnet ist, dass sie ein vernetztes lipophilisiertes Cyclodextrin-Derivat enthält, das aus der Umsetzung einer Verbindung der Formel I 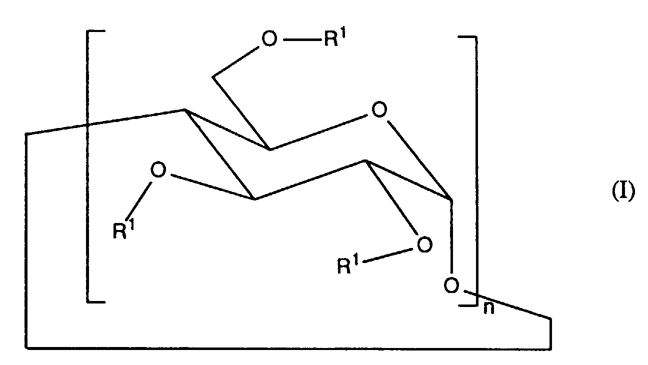 mit einer Verbindung der Formel II erhältlich ist, 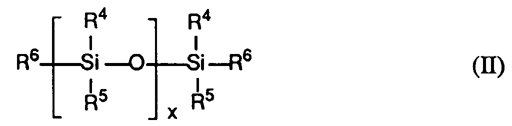 worin n eine Zahl von 6 bis 15 bedeutet, jeder der Reste R¹ unabhängig voneinander für Wasserstoff, R² oder R³ steht, wobei von den (3 mal n) Resten R¹ mindestens ein Rest R¹ die Bedeutung von R³ hat und die verbleibenden Reste R¹ für Wasserstoff stehen oder die Bedeutung von R² haben,
worin R² für unsubstituiertes oder durch Halogen substituiertes Alkyl oder für durch Alkyl substituiertes Aryl steht, und worin R³ für unsubstituiertes oder durch Halogen substituiertes Alkenyl steht,
worin ferner x für eine Zahl von 1 bis 10000 steht, R⁴, R⁵ und R⁶ unabhängig voneinander Wasserstoff, Alkyl, Phenyl oder Hydroxy bedeuten, mit der Massgabe dass in einer Verbindung der Formel II mindestens zwei der Reste R⁴, R⁵ und R⁶ Wasserstoff bedeuten.

## Claims

1. A contact lens comprising a crosslinked lipophilised cyclodextrin derivative which has repeating sub-units of formula V 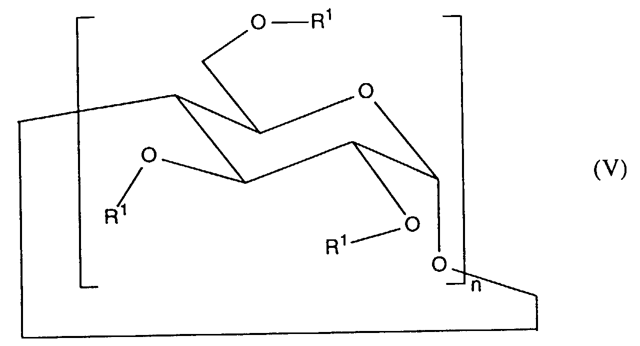 in which
n is an integer of from 6 to 15,
the radicals R¹ are each, independently of the others, hydrogen, R² or R⁷ wherein, of the (3 times n) radicals R¹, at least one radical R¹ has the meaning of R⁷ and the remaining radicals R¹ are hydrogen or have the meaning of R²,
R² being unsubstituted or halogen-substituted alkyl or alkyl-substituted aryl and R⁷ being a di- or poly-valent radical of formula VI 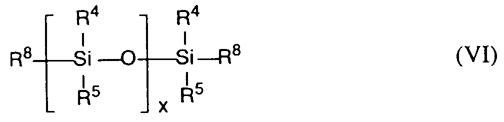
in which
x is an integer of from 1 to 10 000, and
R⁴, R⁵ and R⁸ are each, independently of the others, hydrogen, alkyl, unsubstituted or halogen-substituted alkylene or alkenylene, phenyl or hydroxy, with the proviso that at least two of the radicals R⁴, R⁵ and R⁸ in a radical of formula VI are unsubstituted or halogen-substituted alkylene or alkenylene.

2. A contact lens according to claim 1, comprising a crosslinked lipophilised cyclodextrin derivative which has repeating sub-units of formula V in which
n is an integer of from 6 to 15,
the radicals R¹ are each, independently of the others, hydrogen, R² or R⁷ wherein, of the (3 times n) radicals R¹, at least one radical R¹ has the meaning of R⁷ and the remaining radicals R¹ are hydrogen or have the meaning of R²,
R² being unsubstituted alkyl and
R⁷ being a di- or poly-valent radical of formula VI in which
x is an integer of from I to 1000 and
R⁴, R⁵ and R⁸ are each, independently of the others, hydrogen, alkyl, alkylene or phenyl, at least two of the radicals R⁴, R⁵ and R⁸ being alkylene.

3. A contact lens according to claim 1, comprising a crosslinked lipophilised cyclodextrin derivative which has repeating sub-units of formula V in which
n is an integer of from 6 to 15,
the radicals R¹ in the 2-position and in the 6-position are unsubstituted alkyl, the radicals R¹ in the 3-position have the meaning of R⁷,
x is an integer of from 1 to 1000 and
R⁴, R⁵ and R⁸ are each, independently of the others, hydrogen, alkyl, alkylene or phenyl, at least two of the radicals R⁴, R⁵ and R⁸ being alkylene.

4. A contact lens according to claim 1, comprising a crosslinked lipophilised cyclodextrin derivative which has repeating sub-units of formula V in which
n is an integer of from 6 to 15,
the radicals R¹ in the 2-position and in the 6-position are unsubstituted alkyl, and at least 50 % of the radicals R¹ in the 3-position have the meaning of R⁷ whilst the remaining percentage of the radicals R¹ in the 3-position are unsubstituted alkyl,
x is an integer of from 1 to 1000 and
R⁴, R⁵ and R⁸ are each, independently of the others, hydrogen, alkyl, alkylene or phenyl, at least two of the radicals R⁴, R⁵ and R⁸ being alkylene.

5. A contact lens according to claim 1, comprising a crosslinked lipophilised cyclodextrin derivative which has repeating sub-units of formula V in which
n is an integer of from 6 to 15,
the radicals R¹ in the 3-position are hydrogen, the radicals R¹ in the 2-position and in the 6-position have the meaning of R⁷,
x is an integer of from 1 to 1000 and
R⁴, R⁵ and R⁸ are each, independently of the others, hydrogen, alkyl, alkylene or phenyl, at least two of the radicals R⁴, R⁵ and R⁸ being alkylene.

6. A contact lens according to claim 1, comprising a crosslinked lipophilised cyclodextrin derivative which has repeating sub-units of formula V in which
n is an integer of from 6 to 15,
the radicals R¹ are each, independently of the others, hydrogen, R² or R⁷ wherein, of the (3 times n) radicals R¹, from 50 % to 100 % of a third of those radicals have the meaning of R⁷ whilst the other radicals R¹ have the meaning of hydrogen or R²,
R² being unsubstituted alkyl and
R⁷ being a di- or poly-valent radical of formula VI in which
x is an integer of from 1 to 500 and
R⁴, R⁵ and R⁸ are each, independently of the others, hydrogen, alkyl, alkylene or phenyl, at least two of the radicals R⁴, R⁵ and R⁸ being alkylene.

7. A contact lens according to claim 1, comprising a crosslinked lipophilised cyclodextrin derivative which has repeating sub-units of formula VII 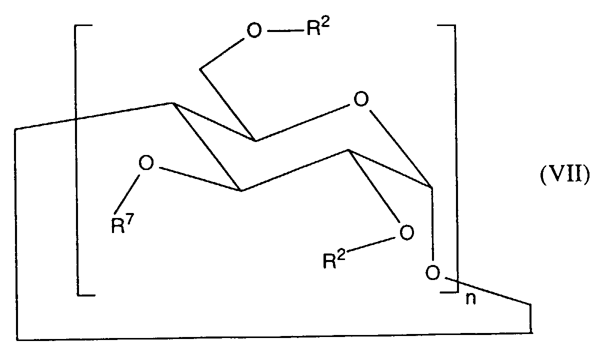 in which
n is an integer of from 6 to 15,
R² is unsubstituted alkyl, and
R⁷ is a divalent radical of formula VIII 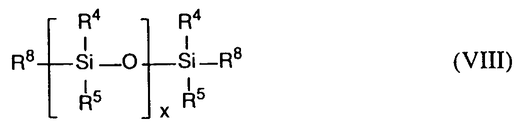
in which
x is an integer of from 1 to 500,
R⁴ and R⁵ are each, independently of the other, alkyl or phenyl, and
R⁸ is alkylene.

8. A contact lens according to claim 1, comprising a crosslinked lipophilised cyclodextrin derivative which has repeating sub-units of formula VII as defined in claim 7, wherein R⁷ is a di- or poly-valent radical of formula VI as defined in claim 1 in which x is an integer of from 1 to 500, and the radicals R⁴, R⁵ and R⁸ are hydrogen, alkyl, alkylene or phenyl, with the proviso that a minimum of two of the radicals R⁴, R⁵ and R⁸ are alkylene and a maximum of about 25 % of the radicals R⁴, R⁵ and R⁸ are hydrogen.

9. A contact lens according to claim 7, comprising a crosslinked lipophilised cyclodextrin derivative which has repeating sub-units of formula VII wherein
R⁷ is a divalent radical of formula VIII, in which formulae
n is an integer 6, 7 or 8,
R² is lower alkyl having from 4 to 7 carbon atoms,
x is an integer of from 1 to 200,
R⁴ and R⁵ are each, independently of the other, lower alkyl having up to 7 carbon atoms or phenyl, and
R⁸ is lower alkylene having from 3 to 6 carbon atoms.

10. A process for the manufacture of a contact lens according to claim 1, which comprises processing in a manner known per se, to form a contact lens, a crosslinked lipophilised cyclodextrin derivative which has repeating sub-units of formula V 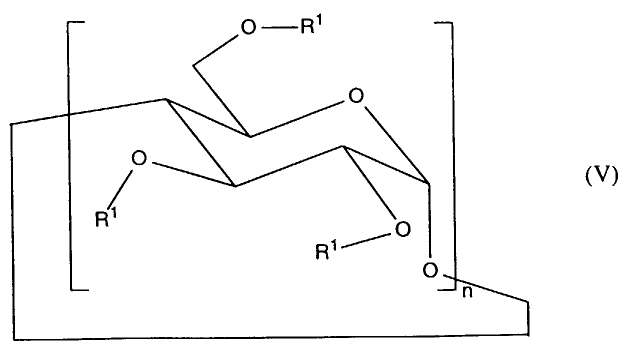 in which
n is an integer of from 6 to 15,
the radicals R¹ are each, independently of the others, hydrogen, R² or R⁷ wherein, of the (3 times n) radicals R¹, at least one radical R¹ has the meaning of R⁷ and the remaining radicals R¹ are hydrogen or have the meaning of R²,
R² being unsubstituted or halogen-substituted alkyl or alkyl-substituted aryl and
R⁷ being a di- or poly-valent radical of formula VI 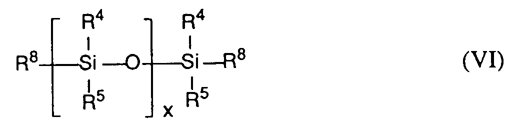 in which
x is an integer of from 1 to 10 000, and
R⁴, R⁵ and R⁸ are each, independently of the others, hydrogen, alkyl, unsubstituted or halogen-substituted alkylene or alkenylene, phenyl or hydroxy, with the proviso that at least two of the radicals R⁴, R⁵ and R⁸ in a radical of formula VI are unsubstituted or halogen-substituted alkylene or alkenylene.

11. The use of a crosslinked lipophilised cyclodextrin derivative which has repeating sub-units of formula V 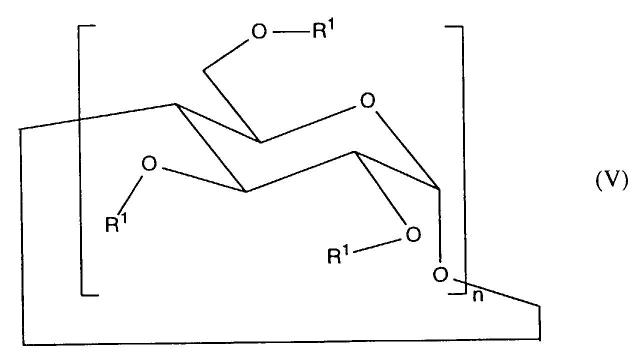 in which
n is an integer of from 6 to 15,
the radicals R¹ are each, independently of the others, hydrogen, R² or R⁷ wherein, of the (3 times n) radicals R¹, at least one radical R¹ has the meaning of R⁷ and the remaining radicals R¹ are hydrogen or have the meaning of R²,
R² being unsubstituted or halogen-substituted alkyl or alkyl-substituted aryl and
R⁷ being a di- or poly-valent radical of formula VI 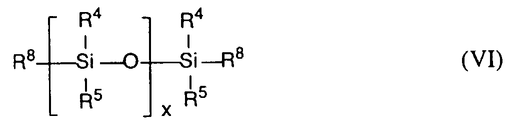 in which
x is an integer of from 1 to 10 000, and
R⁴, R⁵ and R⁸ are each, independently of the others, hydrogen, alkyl, unsubstituted or halogen-substituted alkylene or alkenylene, phenyl or hydroxy, with the proviso that at least two of the radicals R⁴, R⁵ and R⁸ in a radical of formula VI are unsubstituted or halogen-substituted alkylene or alkenylene,
in the manufacture of a contact lens.

12. A contact lens comprising a crosslinked lipophilised cyclodextrin derivative which is obtainable by reacting a compound of formula I 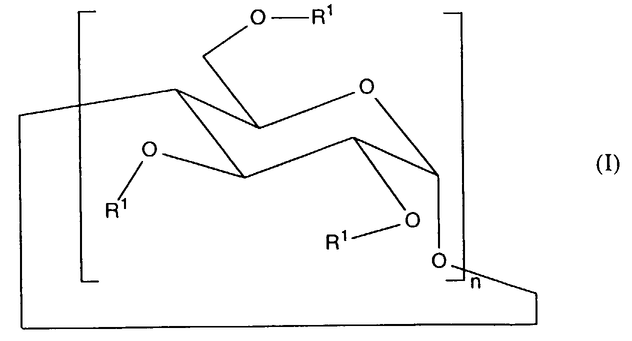 with a compound of formula II 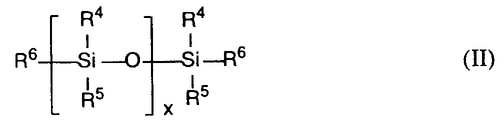 in which formulae
n is an integer of from 6 to 15,
the radicals R¹ are each, independently of the others, hydrogen, R² or R³ wherein, of the (3 times n) radicals R¹, at least one radical R¹ has the meaning of R³ and the remaining radicals R¹ are hydrogen or have the meaning of R²,
R² being unsubstituted or halogen-substituted alkyl or alkyl-substituted aryl and
R³ being unsubstituted or halogen-substituted alkenyl,
x is an integer of from 1 to 10 000, and
R⁴, R⁵ and R⁶ are each, independently of the others, hydrogen, alkyl, phenyl or hydroxy, with the proviso that at least two of the radicals R⁴, R⁵ and R⁶ in a compound of formula II are hydrogen.

## Revendications

1. Lentille de contact qui contient un dérivé de cyclodextrine réticulé rendu lipophile, qui est caractérisé par des sous-unités répétitives de formule V 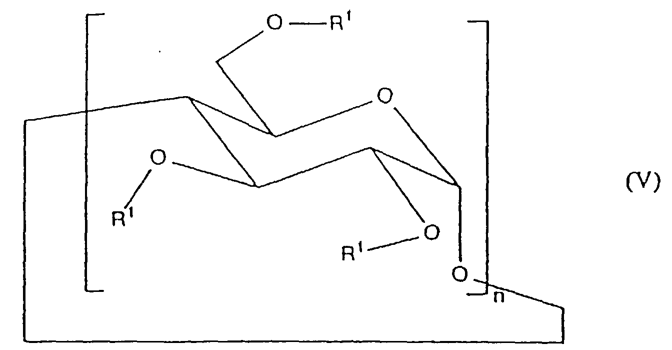 dans laquelle n représente un nombre allant de 6 à 15, les radicaux R¹ représentent chacun, indépendamment les uns des autres, un atome d'hydrogène, R² ou R⁷, parmi les (3 fois n) radicaux R¹, au moins un radical R¹ ayant la signification de R⁷ et les radicaux R¹ restants représentant des atomes d'hydrogène ou ayant la signification de R²,
R² représente un radical alkyle non substitué ou substitué par un halogène, ou un radical aryle substitué par un groupe alkyle, et R⁷ représente un reste à valence 2 ou plus, de formule VI 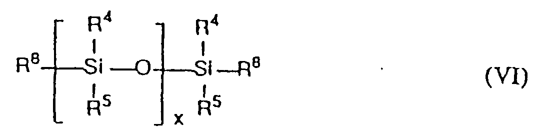 dans laquelle x représente un nombre allant de 1 à 10 000, R⁴, R⁵ et R⁸ représentent, indépendamment les uns des autres, un atome d'hydrogène ou un groupe alkyle, un groupe alkylène ou alcénylène non substitué ou substitué par un halogène, ou le groupe phényle ou hydroxy, étant entendu que dans un reste de formule VI, au moins deux des radicaux R⁴, R⁵ et R⁸ représentent un groupe alkylène ou alcénylène non substitué ou substitué par un halogène.

2. Lentille de contact selon la revendication 1, qui contient un dérivé de cyclodextrine réticulé rendu lipophile, qui est caractérisé par des sous-unités répétitives de formule V dans lesquelles n représente un nombre allant de 6 à 15, les radicaux R¹ représentent chacun, indépendamment les uns des autres, un atome d'hydrogène, R² ou R⁷, parmi les (3 fois n) radicaux R¹, au moins un radical R¹ ayant la signification de R⁷, et les radicaux R¹ restants représentant des atomes d'hydrogène ou ayant la signification de R², R² représente un groupe alkyle non substitué, R⁷ représente un reste de formule VI à valence 2 ou plus, dans lequel x représente un nombre allant de 1 à 1 000 et R⁴, R⁵ et R⁸ représentent, indépendamment les uns des autres, un atome d'hydrogène ou un groupe alkyle, alkylène ou phényle, au moins deux des radicaux R⁴, R⁵ et R⁸ représentant des groupes alkylène.

3. Lentille de contact selon la revendication 1, qui contient un dérivé de cyclodextrine réticulé rendu lipophile, qui est caractérisé par des sous-unités répétitives de formule V dans lesquelles n représente un nombre allant de 6 à 15, les radicaux R¹ en position 2 et en position 6 représentent un groupe alkyle non substitué, les radicaux R¹ en position 3 ont la signification de R⁷, x représente un nombre allant de 1 à 1 000, et R⁴, R⁵ et R⁸ représentent, indépendamment les uns des autres, un atome d'hydrogène ou un groupe alkyle, alkylène ou phényle, au moins deux des radicaux R⁴, R⁵ et R⁸ représentant des groupes alkylène.

4. Lentille de contact selon la revendication 1, qui contient un dérivé de cyclodextrine réticulé rendu lipophile, qui est caractérisé par des sous-unités répétitives de formule V dans lesquelles n représente un nombre allant de 6 à 15, les radicaux R¹ en position 2 et en position 6 représentent un groupe alkyle non substitué, et les radicaux R¹ en position 3 ont à raison d'au moins 50 % la signification de R⁷, tandis que le pourcentage restant de radicaux R¹ en position 3 représentent un groupe alkyle non substitué, x représente un nombre allant de 1 à 1 000, et R⁴, R⁵ et R⁸ représentent, indépendamment les uns des autres, un atome d'hydrogène ou un groupe alkyle, alkylène ou phényle, au moins deux des radicaux R⁴, R⁵ et R⁸ représentant des groupes alkylène.

5. Lentille de contact selon la revendication 1, qui contient un dérivé de cyclodextrine réticulé rendu lipophile, qui est caractérisé par des sous-unités répétitives de formule V dans lesquelles n représente un nombre allant de 6 à 15, les radicaux R¹ en position 3 représentent un atome d'hydrogène, les radicaux R¹ en position 2 et en position 6 ont la signification de R⁷, x représente un nombre allant de 1 à 1 000, et R⁴, R⁵ et R⁸ représentent, indépendamment les uns des autres, un atome d'hydrogène ou un groupe alkyle, alkylène ou phényle, au moins deux des radicaux R⁴, R⁵ et R⁸ représentant des groupes alkylène.

6. Lentille de contact selon la revendication 1, qui contient un dérivé de cyclodextrine réticulé rendu lipophile, qui est caractérisé par des sous-unités répétitives de formule V dans lesquelles n représente un nombre allant de 6 à 15, les radicaux R¹ représentent, indépendamment les uns des autres, chacun un atome d'hydrogène, R² ou R⁷, parmi les (3 fois n) radicaux R¹, 50 à 100 % d'un tiers de ces radicaux ayant la signification de R⁷, tandis que les autres radicaux R¹ ont la signification d'un atome d'hydrogène ou de R², R² représente un groupe alkyle non substitué, R⁷ représente un reste de formule VI à valence 2 ou plus, dans lequel x représente un nombre allant de 1 à 500, et R⁴, R⁵ et R⁸ représentent, indépendamment les uns des autres, un atome d'hydrogène ou un groupe alkyle, alkylène ou phényle, au moins deux des radicaux R⁴, R⁵ et R⁸ représentant des groupes alkylène.

7. Lentille de contact selon la revendication 1, qui contient un dérivé de cyclodextrine réticulé rendu lipophile, qui est caractérisé par des sous-unités répétitives de formule VII 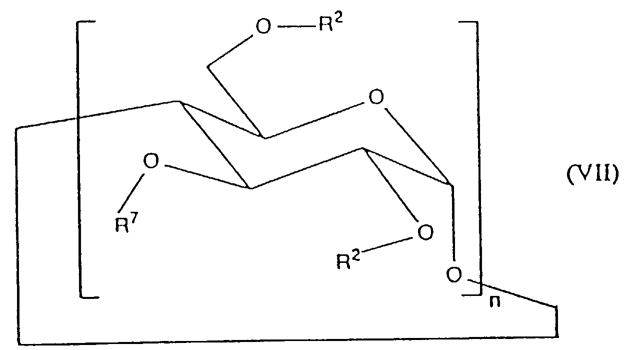 dans laquelle n représente un nombre allant de 6 à 15, R² représente un groupe alkyle non substitué, et R⁷ représente un radical divalent de formule VIII 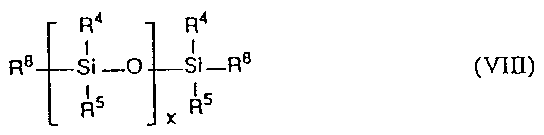 dans laquelle x représente un nombre allant de 1 à 500, R⁴ et R⁵ représentent, indépendamment l'un de l'autre, un groupe alkyle ou phényle, et R⁸ représente un groupe alkylène.

8. Lentille de contact selon la revendication 1, qui contient un dérivé de cyclodextrine réticulé rendu lipophile, qui est caractérisé par des sous-unités répétitives de formule VII, telle que définie dans la revendication 7, dans lesquelles R⁷ représente un reste de formule VI à valence 2 ou plus, tel que défini dans la revendication 1, dans lequel x représente un nombre allant de 1 à 500, les radicaux R⁴, R⁵ et R⁸ représentent un atome d'hydrogène ou un groupe alkyle, alkylène ou phényle, étant entendu qu'au moins deux des radicaux R⁴, R⁵ et R⁸ représentent des groupes alkylène, et au maximum environ 25 % des radicaux R⁴, R⁵ et R⁸ représentent des atomes d'hydrogène.

9. Lentille de contact selon la revendication 7, qui contient un dérivé de cyclodextrine réticulé rendu lipophile, qui est caractérisé par des sous-unités répétitives de formule VII, dans lesquelles R⁷ représente un reste divalent de formule VIII, dans lequel n est égal à 6, 7 ou 8, R² représente un groupe alkyle inférieur ayant de 4 à 7 atomes de carbone,
x représente un nombre allant de 1 à 200, R⁴ et R⁵ représentent, indépendamment l'un de l'autre, un groupe alkyle inférieur ayant jusqu'à 7 atomes de carbone, ou le groupe phényle, et R⁸ représente un groupe alkylène inférieur ayant de 3 à 6 atomes de carbone.

10. Procédé pour la fabrication d'une lentille de contact selon la revendication 1, caractérisé en ce qu'un dérivé de cyclodextrine réticulé rendu lipophile, qui est caractérisé par des sous-unités répétitives de formule V 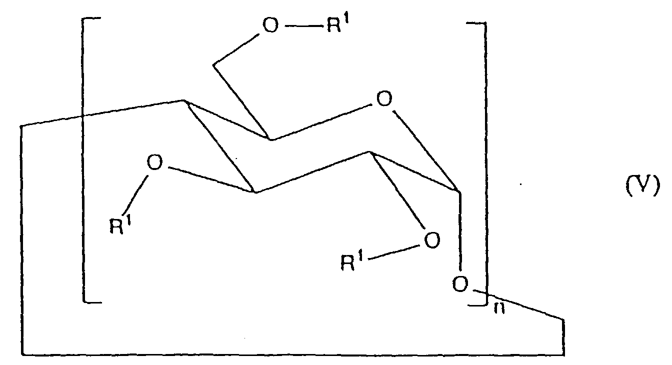 dans laquelle n représente un nombre allant de 6 à 15, les radicaux R¹ représentent chacun, indépendamment les uns des autres, un atome d'hydrogène, R² ou R⁷, parmi les (3 fois n) radicaux R¹, au moins un radical R¹ ayant la signification de R⁷ et les radicaux R¹ restants représentant des atomes d'hydrogène ou ayant la signification de R²,
R² représente un radical alkyle non substitué ou substitué par un halogène, ou un radical aryle substitué par un groupe alkyle, et R⁷ représente un reste à valence 2 ou plus, de formule VI 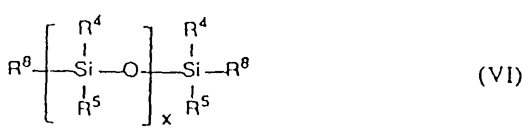 dans laquelle x représente un nombre allant de 1 à 10 000, R⁴, R⁵ et R⁸ représentent, indépendamment les uns des autres, un atome d'hydrogène ou un groupe alkyle, un groupe alkylène ou alcénylène non substitué ou substitué par un halogène, ou le groupe phényle ou hydroxy, étant entendu que dans un reste de formule VI, au moins deux des radicaux R⁴, R⁵ et R⁸ représentent un groupe alkylène ou alcénylène non substitué ou substitué par un halogène,
est transformé, d'une façon connue en soi, en une lentille de contact.

11. Utilisation d'un dérivé de cyclodextrine réticulé rendu lipophile, qui est caractérisé par des sous-unités répétitives de formule V 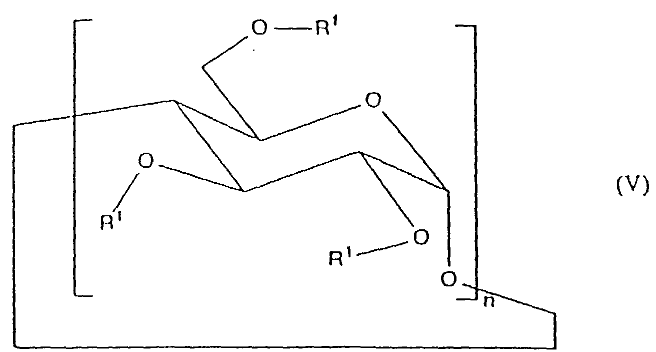 dans laquelle n représente un nombre allant de 6 à 15, les radicaux R¹ représentent chacun, indépendamment les uns des autres, un atome d'hydrogène, R² ou R⁷, parmi les (3 fois n) radicaux R¹, au moins un radical R¹ ayant la signification de R⁷ et les radicaux R¹ restants représentant des atomes d'hydrogène ou ayant la signification de R²,
R² représente un radical alkyle non substitué ou substitué par un halogène, ou un radical aryle substitué par un groupe alkyle, et R⁷ représente un reste à valence 2 ou plus, de formule VI 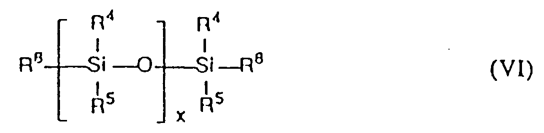 dans laquelle x représente un nombre allant de 1 à 10 000, R⁴, R⁵ et R⁸ représentent, indépendamment les uns des autres, un atome d'hydrogène ou un groupe alkyle, un groupe alkylène ou alcénylène non substitué ou substitué par un halogène, ou le groupe phényle ou hydroxy, étant entendu que dans un reste de formule VI, au moins deux des radicaux R⁴, R⁵ et R⁸ représentent un groupe alkylène ou alcénylène non substitué ou substitué par un halogène,
pour la fabrication d'une lentille de contact.

12. Lentille de contact qui est caractérisée en ce qu'elle contient un dérivé de cyclodextrine réticulé rendu lipophile, qui peut être obtenu par la réaction d'un composé de formule I 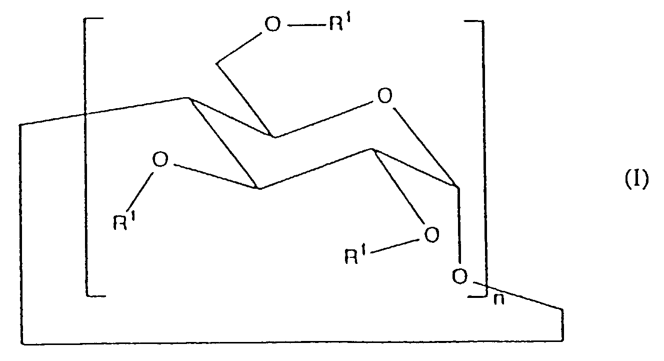 avec un composé de formule II 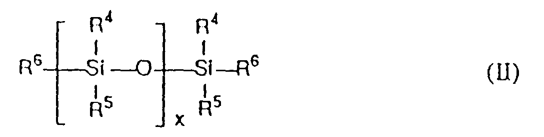 formules dans lesquelles n est un nombre allant de 6 à 15, chacun des radicaux R¹ représente, indépendamment les uns des autres, un atome d'hydrogène, R² ou R³, parmi les (3 fois n) radicaux R¹, au moins un radical R¹ ayant la signification de R³ et les radicaux R¹ restants représentant un atome d'hydrogène ou ayant la signification de R²,
R² représente un radical alkyle non substitué ou substitué par un halogène, ou un radical aryle substitué par un groupe alkyle, et R³ représente un radical alcényle non substitué ou substitué par un halogène,
et x représente un nombre allant de 1 à 10 000, R⁴, R⁵ et R⁶ représentent, indépendamment les uns des autres, un atome d'hydrogène ou un groupe alkyle, phényle ou hydroxy, étant entendu que dans un composé de formule II, au moins deux des radicaux R⁴, R⁵ et R⁶ représentent des atomes d'hydrogène.
